(19) Europäisches Patentamt / European Patent Office / Office européen des brevets

(11) **EP 1 217 780 B1**

(12) **EUROPÄISCHE PATENTSCHRIFT**

(45) Veröffentlichungstag und Bekanntmachung des Hinweises auf die Patenterteilung:
**17.05.2017   Patentblatt 2017/20**

(51) Int Cl.:
*H04L 5/02* *(2006.01)*     *H04L 7/04* *(2006.01)*

(21) Anmeldenummer: **01130644.6**

(22) Anmeldetag: **21.12.2001**

(54) **Verfahren und Vorrichtung zur Erkennung von Kollisionen bei der Teilnehmeranmeldung in einem TDMA-Nachrichtenübertragungs-system**

Method and Apparatus for collision detection during the login procedure of subscribers in a TDMA communication system

Procede et appareil pour detection de collision au cours d'annoncer une station abonnée dans un système de communication TDMA

(84) Benannte Vertragsstaaten:
**AT BE CH CY DE DK ES FI FR GB GR IE IT LI LU MC NL PT SE TR**

(30) Priorität: **21.12.2000   DE 10064425**

(43) Veröffentlichungstag der Anmeldung:
**26.06.2002   Patentblatt 2002/26**

(73) Patentinhaber: **iAd Gesellschaft für Informatik, Automatisierung und Datenverarbeitung mbH 90613 Grosshabersdorf (DE)**

(72) Erfinder: **Lampe, Lutz.Herr.Dipl.Ing D-91056 Erlangen-Büchenbach (DE)**

(74) Vertreter: **Dreykorn-Lindner, Werner Patentanwalt Steinlachstrasse 2 90571 Schwaig (DE)**

(56) Entgegenhaltungen:
EP-A- 0 760 564     EP-A- 0 936 832
US-A- 5 504 775     US-A- 5 544 155

- AWDUCHE D O ET AL: "MAC protocol for wireless networks in tactical environments" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21. Oktober 1996 (1996-10-21), Seiten 923-927, XP010204035 ISBN: 0-7803-3682-8
- HARADA H ET AL: "Cyclic extended spread coded multicarrier CDMA/TDD transmission scheme for wireless broadband multimedia communications" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18. Mai 1998 (1998-05-18), Seiten 1899-1904, XP010288114 ISBN: 0-7803-4320-4

**Beschreibung**

Die Erfindung betrifft in erster Linie ein Verfahren zum Vielfachzugriff in einem Kommunikationssystem mit einer einzigen Zentrale und einer Vielzahl von Teilnehmern im Kommunikationsnetzwerk (Patentanspruch 1). Weiterhin betrifft die Erfindung eine Vorrichtung zur Durchführung des Verfahrens nach Patentanspruch 1.

Bei drahtgebundenen oder drahtlosen Punkt zu Mehrpunkt- Übertragungsverfahren, wie beispielsweise passiven optischen Netzen, Koaxialkabelnetzen, Automatisierungssystemen oder Funksystemen mit Rückkanal, Satellitenverbindungen kommunizieren mehrere Teilnehmer mit einer Zentrale. So ist aus der DE 196 43 970 A1 ein Verfahren für die Signalübertragung in einem Netz für Punkt-Zu-Mehrpunkt-Verbindungen, bei dem der Zugriff der einzelnen Stationen auf ein Übertragungsmedium durch ein TDM/TDMA-Verfahren erfolgt. Hierzu werden in Richtung Punkt-Zu-Mehrpunkt von einer Kopfstation TDM-Signale und in umgekehrter Richtung von einzelnen Mehrpunkt-Stationen burstartig Signale ausgesendet werden, die an einem oder mehreren Splittern zu einem TDMA-Signal für die Kopfstation zusammengefügt werden. Diese allgemein als Bursts bezeichneten Blöcke von Nutzdaten sind nicht exakt zueinander synchron und treffen im Empfänger nach unterschiedlicher Laufzeit mit unterschiedlicher Signalamplitude/Taktphase ein. Jedem Datenburst sind Guard- und Run-In-Bits vorangestellt, wobei die Guard-Bits das Überlagern zweier Datenbursts verhindern und die Run-In-Bits zu Synchronisation im Empfänger dienen. Da die Entfernung zwischen der Zentrale und der Teilnehmerstation unbekannt ist, muss jede Teilnehmerstation bei Inbetriebnahme eingemessen werden, wozu in einem Einmessfenster des zur Verfügung stehenden Datenübertragungsrahmens Einmessdaten (Datenbursts mit synchronen oder asynchronen Daten) gesendet werden. Im einzelnen werden die burstartigen Signale der Mehrpunkt-Stationen von einem Splitter zu einem Rahmen zusammengefasst, der in einem Teil für synchrone Daten und in einem anderen Teil für wahlweise asynchrone Nutzdaten oder Einmessdaten vorgesehen ist.

In Weiterbildung dieses Signalübertragungsverfahrens für optische Netze - bei dem die Bursts an wenigstens einem Splitter zu einem TDMA-Signal für die Kopfstation zusammengefasst werden und sich die übertragenen Nutzdaten aus den einzelnen den Mehrpunkt-Stationen zugeordneten und in einem Rahmen zusammengefassten Kontrollkanälen und Datenkanälen zusammensetzen - wird in der DE 197 26 009 A1 vorgeschlagen, dass die Kontrollkanäle und die Datenkanäle für jede Mehrpunkt-Station getrennt übertragen werden. Hierdurch können die Übertragungskapazitäten, d.h. die Anzahl der Datenkanäle pro Station während des Betriebs verändert werden, ohne dass eine Verschiebung der Kontrollkanäle notwendig ist und es kann ein sogenanntes bandwidth-on-demand-fähiges Nachrichtenübertragungssystem aufgebaut werden.

Weiterhin ist aus der DE 195 11 403 A1 ein Verfahren zur automatischen Bursterkennung bei Vielfachzugriffsverfahren - vorzugsweise in TDM/TDMA-Systemen - bekannt, bei dem vor dem zu übertragenden Nutzdatenblock eine aus mehreren Bit bestehende Präambel übertragen wird. Im einzelnen wird vor der Aussendung der Präambel für vergleichsweise kurze Zeit ein Pilotsignal mit vergleichsweise hoher Amplitude ausgesendet, dessen Frequenz sich bei einer Nullstelle des für die Nutzsignalübertragung verwendeten Codes oder außerhalb des Signalspektrums des Nutzsignals befindet. Aus dem übertragenen Pilotsignal wird empfangsseitig ein Steuersignal erzeugt und dieses Steuersignal aktiviert die empfangsseitige Taktrückgewinnungsschaltung und/oder die empfangsseitige Pegelregelung.

Im folgenden wird von einem Kommunikationsnetzwerk mit maximal K Teilnehmern ausgegangen, bei dem alle Teilnehmer eine digitale Datenübertragung über das gleiche, in der Regel dispersive Medium, z.B. Kabel, Luft, durchführen. Der Mehrfachzugriff auf dieses Medium wird mittels time-division multiple access (TDMA) realisiert, d.h., einzelnen Teilnehmern werden bestimmte Zeitschlitze zur Übertragung zugewiesen. Um den Bedürfnissen schneller Datenübertragung einzelner Teilnehmer gerecht zu werden, erfolgt die Zuweisung von Zeitschlitzen dynamisch durch eine zentral positionierte Einheit (Master). Will ein Teilnehmer Daten senden, so muss er zuvor eine Anmeldung beim Master vornehmen, so dass dieser die geforderten Ressourcen (Zeitschlitze) zur Verfügung stellt. Für das Senden von Anmeldungen sind im TDMA-Rahmen spezielle Zeitschlitze vorgesehen.

Nutzen mehrere Teilnehmer einen Anmeldezeitschlitz gleichzeitig zur Signalisierung eines Übertragungswunsches, so tritt eine Kollision auf, d.h., der Master kann die Anmeldung nicht detektieren bzw. bezüglich der Teilnehmer auflösen und dementsprechend keine Zeitschlitze zur Datenübertragung zur Verfügung stellen.

Der Mehrfachzugriff mittels TDMA ist eine weitverbreitete Technik, welche z.B. im GSM-Mobilfunk Anwendung findet. Die Anmeldung von Teilnehmern in das Netzwerk erfolgt in der Regel über spezielle Kanäle, also spezielle Zeitschlitze zur Signalisierung. Diese können statisch oder dynamisch vergeben werden. Die Problematik der Kollisionen bei gleichzeitiger Nutzung des Anmeldezeitschlitzes durch mehrere Teilnehmer wird dadurch gelöst, dass die Auswahl eines Anmeldezeitschlitzes durch den Teilnehmer nach einem Zufallsprinzip erfolgt und somit die Wahrscheinlichkeit einer Kollision reduziert wird und bei aufgetretener Kollision eine erneute Anmeldung nach einer mit einem Zufallsprinzip ermittelten Wartezeit vorgenommen wird, so dass die Wahrscheinlichkeit für eine erneute Kollision gering ist. Gegebenenfalls kann der Master die Anzahl der Zeitschlitze zur Anmeldung modifizieren, um das Auftreten von Kollisionen einzuschränken. Im einzelnen sind derartige Verfahren in folgenden Fachbüchern bzw. Fachzeitschriften:

- A.S. Tanenbaum: Computer Networks. Prentice Hall, Upper Saddle River, New Jersey, third edition, 1996.

- G. Anastasi, L. Lenzini, E. Mingozzi, A. Hettich, A. Krämling: MAC Protocols for Wideband Wireless Local Access: Evolution Toward Wirelss ATM. IEEE Personal Communications, pp. 53-64, Oktober, 1998.
- D. Petras, U. Vornefeld: Joint Performance of DSA++ MAC Protocol and SR/D-ARQ Protocol for Wireless ATM under Realistic Traffic and Channel Models. Computer Networks (31), pp. 903-918, 1999.

beschrieben.

Weiterhin sind sogenannte Multiträgersystemen zur digitalen Übertragung von Daten bekannt. Beispiel hierfür ist das OFDM-Verfahren (Orthogonal Frequency Division Multiplexing), welches sich als zuverlässiges und kostengünstiges Verfahren erwiesen hat und welches als Übertragungsverfahren zur Anwendung in dem digitalen Audio-Rundfunkstandard DAB (Digital Audio Broadcasting), dem digitalen terrestrischen Fernsehrundfunkstandard DTTB (Digital Terrestrial Television Broadcasting), bei der Übertragung über Zweidrahtleitungen mit ADSL (dort als DMT bezeichnet) und bei der drahtlosen Kommunikation in lokalen Netzwerken gemäß dem Hiper-LAN2-Standard (High Performance Radio Local Area Network Type 2) benutzt wird. Bei dem OFDM-Verfahren werden seriell eingegebene Symbolströme in einen vorgegebenen Einheitsblock aufgeteilt. Die aufgeteilten Symbolströme jedes Einheitsblocks werden in N parallele Symbole umgewandelt. Die N parallelen Symbole werden durch Multiplexbildung und Addition zusammengefasst, indem mehrere Unterträger nach Maßgabe eines inversen schnellen Fourier-Transformationsalgorithmus IFFT (Inverse Fast Fourier Transformation) mit jeweils unterschiedlichen Frequenzen verwendet werden, und die so addierten Daten werden über den Kanal übertragen. Dadurch wird erreicht, dass N parallele Symbole als ein Einheitsblock definiert sind, und jeder Unterträger des Einheitsblocks weist eine Orthogonalität (sowohl für zeitlich aufeinanderfolgende als auch spektral benachbarte Symbole) bezüglich ISI (Inter-Symbol Interference) und ACI (Nachbarkanalinterferenz) auf. Verglichen mit einem herkömmlichen Einzelträger-Übertragungsverfahren kann das OFDM-Verfahren eine durch Mehrwege-Schwund (multipath fading) in einem Empfangssignal verursachte Zwischensymbolstörung bzw. -Interferenz ISI vermindern, indem es dieselbe Symbolübertragungsrate aufrechterhält und die Symbolperiode um die Anzahl an Unterkanälen (N) erhöht. Insbesondere wird beim OFDM-Verfahren ein Schutzintervall (Guard-Interval) zwischen die übertragenen Symbole eingefügt.

Im Gegensatz zum Frequenzmultiplexverfahren FDM (Frequency Division Multiplexing) hat das OFDM-Verfahren die Eigenschaft, dass die Spektren jedes Unterkanals überlagert werden, um diesem zu einer höheren Bandeffizienz zu verhelfen. Ein Nachteil des OFDM-Verfahrens ist, dass aufgrund der unterschiedlichen Impulsdauern der Sende- und Empfangsfilter keine optimale Rauschanpassung im Sinne der Matched-Filterung vorliegt.

Der Vorteil des OFDM-Verfahrens liegt in der einfachen Realisierung; aufgrund der rechteckförmigen Sende- und Empfangsfilter-Impulsantworten reduzieren sich die Filterbänke auf einfache IDFT- und DFT-Operationen, die mit dem FFT-Algorithmus realisiert werden können. Weiterhin sind keinerlei Kanalkorrekturmaßnahmen erforderlich, solange die Dauer der Kanalimpulsantwort unterhalb der Länge des Guard-Intervalls liegt. Außerdem weist das Spektrum eine Welle mit einer Rechteckform auf, und die elektrische Leistung ist gleichmäßig bei jedem Frequenzband verteilt, was einen Einfluss durch die Gleichkanalstörung verhindert. Das OFDM-Verfahren wird meist mit Modulationsarten wie Pulsamplitudenmodulation PAM, Phasenumtastung PSK (Phase Shift Keying) und/oder Quadraturamplitudenmodulalion (QAM) kombiniert.

Weiterhin sind Kommunikationssysteme mit gemischten Frequenz- und Zeitmultiplexverfahren bekannt. Beispielsweise ist in der DE 43 91 438 C2 ein Verfahren zum Zuordnen von Kommunikationskanälen in einem Funkkommunikationssystem mit Mehrfachzugriff und Frequenz- und Zeitunterteilung zur Übertragung von Kommunikationssignalen, wobei die Kommunikationskanäle durch eine Vielzahl von Zeitschlitzen in einem Frame definiert sind, beschrieben, bei dem ein Kommunikationssignal einer Vielzahl der Kommunikationskanäle zeitlich nacheinander sowohl nach Maßgabe einer vorbestimmten. Frequenzsequenz als auch nach Maßgabe einer vorbestimmten Zeitschlitzsequenz zugeordnet wird, wobei das Zuordnen der Zeitschlitze Vorrang vor dem Zuordnen der Frequenzen besitzt.

Für ein TDMA-Mobilfunksystem mit mindestens einer ortsfesten Funkstation und mehreren beweglichen Stationen sowie Funkübertragungskanälen für die Signalisierung und Sprachübertragung ist beim Gegenstand der DE 44 32 928 C2 eine Kombination aus Baseband-Hopping und Synthesizer-Hopping beschrieben, wobei das Baseband-Hopping die Sprachkanäle auf die unterschiedlichen Träger verteilt und mindestens einer der Träger mit der Zeit seine Frequenz ändert.

Zur Verkürzung der Synchronisationszeit eines Mobilteils in einem Mobilfunksystem ist in der DE 197 38 365 C2 ein Verfahren für ein nach einem FDMA/TDMA-Verfahren arbeitenden Mobilfunksystem beschrieben, bei welchem seitens des Mobilteils eine von einer Basisstation ausgesandte Trägerfrequenz mit einem Dummy Bearer passender Identität gesucht wird, bis Synchronisation mit der Basisstation bzw. ein Zeitlimit erreicht ist. Im einzelnen ist vorgesehen, dass nach Auffinden einer geeigneten Trägerfrequenz und Synchronisation diese Trägerfrequenz in einen Frequenzspeicher des Mobilteils eingeschrieben wird. Nach Unterbrechung der Verbindung bzw. neuerlichem Einschalten des Mobilteils ein geeigneter Dummy Bearer wird zunächst auf der abgespeicherten Frequenz und erst nach erfolgloser Suche auf weiteren Frequenzen gesucht.

In Weiterbildung hierzu ist in der DE 197 42 347 A1 ein Verfahren zur drahtlosen Übertragung von Daten - wobei die Daten in Zeitschlitzen in einem FrequenzmultiplexVerfahren (FDMA), Zeitmultiplex- Verfahren (TDMA) und mit einer Zeitlagentrennung (TDD) übertragen werden - beschrieben, bei dem die Trägerfrequenz nach einer vorbestimmten Zeitdauer gewechselt wird und die Daten in einem Zwei-Pegel- oder höherwertigeren Modulationsverfahren auf die Trägerfrequenz moduliert werden.

Eine weitere Möglichkeit zur Steuerung einer Sende-/Empfangseinrichtung von Basisstationen bzw. Mobilteilen eines Schnurlostelefonsystems ist in der DE 92 14 885 U1 beschrieben. Die Basisstationen bzw. die Mobilteile weisen jeweils einen Prozessor auf, dem ein in der Weise ausgestaltetes Steuerungsprogramm zugeordnet ist, dass Funkverbindungen auf vorgegebenen Frequenzen (FDMA) und in mehreren Zeitschlitzen von Zeitmultiplexkanälen (TDMA) erfolgen. Das Steuerungsprogramm ist weiterhin in der Weise ausgestaltet, dass aus der Menge vorgegebener Zeitschlitze nur eine Teilmenge nicht unmittelbar aufeinanderfolgender Zeitschlitze für die Funkverbindungen ausgewählt werden

Auch die Kombination von TDMA mit orthogonalem Frequenzmultiplex ist bekannt. Dabei können verschiedenen Teilnehmern unterschiedliche OFDM-Teilträger, also praktisch unterschiedliche Übertragungsfrequenzbereiche, zugeordnet werden, so dass eine gleichzeitige Anmeldung mehrerer Teilnehmer ohne Kollision möglich ist, wie dies z.B. in dem Kongressbericht

R. Chandran, M.J. Patton, P.J.W. Melsa, D.J. Marchok: Asynchronous Communication and Symbol Synchronisation in Multipoint-to-point Multicarrier Systems, Global Telecommunications Conference - Globecom' 99, pp. 2285-2289, 1999 beschrieben ist.

Allerdings ist diese Strategie bei in den meisten Anwendungen vorliegenden frequenzselektiven Kanalverhalten nicht praktikabel. Durch den frequenzselektiven Übertragungskanal werden die Anmeldesignale verschiedener Teilnehmer sehr stark unterschiedlich gedämpft. Die stark gedämpften Signale sind gegenüber den schwach gedämpften Signalen und auch gegenüber dem immer auftretenden Empfängerrauschen im Master nicht zu detektieren. Demzufolge können abhängig von der in der Regel zeitvarianten Kanalcharakteristik einige Teilnehmer überhaupt keine Anmeldung vornehmen.

Zum Vermeiden von Kollisionen bei Funkkommunikation ist aus der DE 196 41 084 A1 ein Verfahren, eine Vorrichtung und ein Kommunikationsnetzwerk bekannt. Das dort beschriebene Verfahren geht von einem Telekommunikationsnetzwerk mit bidirektionaler Kommunikation im Zeitmultiplex aus, bei der Mitteilungen in einer ersten Kommunikationsrichtung in einem ersten Zeitschlitz und in einer zweiten, entgegengesetzten Kommunikationsrichtung in einem zweiten Zeitschlitz übertragen werden. Im einzelnen ist vorgesehen, dass der in der ersten Kommunikationsrichtung verwendete erste Zeitschlitz erfasst wird und dass für den zweiten Zeitschlitz auf Grundlage dieser Erfassung ein solcher Zeitschlitz ausgewählt wird, der nicht mit dem ersten Zeitschlitz überlappt.

Weiterhin sind Nachrichtenübertragungssysteme bekannt, bei denen die Information über das Medium Energiekabel verteilt wird. Die Topologie der Übertragungsstrecke zwischen Trafostation und Hausanschlusskasten ist in diesen sogenannten PLC-Systemen (Power Line Communication) meist eine Punkt-zu-Mehrpunkt-Struktur mit der Trafostation als Knotenpunkt. In der Regel erfolgt die Datenübertragung unter Benutzung der CPFSK (continuous phase frequency shift keying) und der Netzfrequenz als Referenzsignal zur Synchronisierung einer FSK-Übertragung im korrelativ auswertenden Empfänger. Wie beispielsweise in der DE 197 04 018 A1 beschrieben ist, kann das Datentelegramm eine vorangestellte 4-Bit-Trainingssequenz, eine 16-Bit Präambel und einen Nachrichtenteil aufweisen. Um auch bei starken Netzfrequenzschwankungen eine ausreichend gute Synchronisation für die Auswertung langer Datentelegramme zu erreichen, wird sendeseitig eine von der Nennfrequenz durch Vervielfachung abgeleitete Baudrate verwendet. Die Berechnung des Sendebeginns erfolgt auf der Grundlage der aufbereiteten aktuellen Netzfrequenz und einer gewählten und festgelegten Nerinbaudrate. Wird eine Präambel oder ein Teil davon gefunden, so wird aus der Relation der Korrelatorergebnisse ein optimaler zeitlicher Synchronpunkt ermittelt und zur weiteren Prüfung des empfangenen Bitstroms wird die Bitdauer (Bitbreite) fest auf die Nennbitbreite der sendeseitig eingestellten Baudrate gesetzt. Damit wird für die Erfassung des restlichen Telegramms eine Unabhängigkeit von der tatsächlichen Netzfrequenz erreicht. Ein weiteres Verfahren und eine Einrichtung zur Übertragung digitaler Informationen über elektrische Energieverteilnetze unter Benutzung bandspreizender Modulationsverfahren (Spread Spectrum Techniques) ist in der DE 44 23 978 A1 auf der Grundlage der europäischen Norm EN 50 061-1/1991 beschrieben.

Schließlich ist aus der US-A-5,917,813 ein Multimedia-Kommunikationsnetzwerk für CATV-Systeme bekannt, bei dem in Abhängigkeit von der Verkehrslast ein Übergang zwischen einer kollisionsfreien Nachrichtenübertragung und einer Nachrichtenübertragung, bei der Kollisionen zugelassen sind, erfolgt. Das Zugriffsprotokoll bzw. der Zugriffskanal wird in der Zentralstation mittels eines Kanalbefehls festgelegt. Der Zugriffskanal kann beispielsweise eine bestimmte Frequenz, ein bestimmter Zeitschlitz in einem Zeitrahmen oder eine bestimmte Bitstelle in einem Zugriffszeitschlitz sein. Erfolgt während des Kollisionen zulassenden Zugriffsprotokolls ein gleichzeitiger Zugriff auf den Zugriffskanal durch mehrere Teilnehmerstationen, so löst die Zentralstation für diese Teilnehmerstationen den Zugriffskonflikt auf, wobei während dieser Zeit die anderen Teilnehmerstationen auf den Zugriffskanal nicht zugreifen dürfen. Um das Auftreten von Kollisionen zu reduzieren, kann bei diesem speziellen Multimedia-Kommunikationsnetzwerk auch ein CDMA-Verfahren und auch die Benutzung verschiedener verketteter Befehlssequenzen und Meldungsformate, einschließlich verschiedene Teilnehmeradressen und Prioritäten, vorgesehen werden.

Auf dem technischen Gebiet der zellularen Mobilfunksysteme ist aus der EP 0 936 832 A1 ein Codemultiplex-Vielfachzugriffsverfahren (CDMA) bekannt, bei dem eine Mobilstation sich zur Reservierung eines Kanal, auf dem Paketdaten blockweise zu einer Basisstation übertragen werden, einen Code aus einer Vielzahl von Codes zufällig auswählt. Dann werden Reservierung-Paketdaten von der Mobilstation mit dem gewählten Code moduliert und die modulierten, in einen Übertragungsrahmen eingefügten Reservierung-Paketdaten zur Basisstation übertragen. Für den Fall, dass die Basisstation nach Erhalt der Reservierung-Paketdaten den Kanal reserviert, wird in der Basisstation das Reservierung-Paket, einschließlich der Anzahl der reservierten Kanäle und ein Reservierungs-Typ, von der Mobilstation empfangen. Dann wird von der Basisstation eine Kanal-Reservierung in Übereinstimmung mit dem Reservierungs-Typ und dem empfangenen Reservierung-Paket ausgeführt, und dem Reservierungs-Typ entsprechende Antwortdaten über eine Funkstrecke zur Mobilstation übertragen, welche den Kanal reserviert hat.

Auf dem gleichen technischen Gebiet der zellularen Mobilfunksysteme ist aus der US-A-5 544 155 ein Synchronisationsverfahren mit Codemultiplex-Vielfachzugriff (CDMA) bekannt. Dabei erstellt eine Basisstation zusätzlich zu den CDMA-Übertragungskanälen - die jeweils durch eine Spreizsequenz definiert sind, welche die zu übertragenden Datenbits moduliert - einen Steuerkanal, auf dem eine pseudozufällige periodische Bezugssequenz ausgesendet wird. Die Bezugssequenz ist mit den Spreizsequenzen synchronisiert und weist einen Takt auf, der höher als derjenige der zu übertragenden Bits ist. Die auf diesen Kanälen übertragenen Basisbandsignale werden kombiniert und dann auf eine Trägerfrequenz aufmoduliert, um das von der Basisstation zu den Mobilstationen auszusendende Funksignal zu bilden. Eine Mobilstation wählt mindestens eine pseudozufällige periodische Sequenz aus, welche der auf dem Steuerkanal einer Basisstation ausgesendeten und von der Mobilstation über die Funkstrecke empfangenen Bezugssequenz entspricht und gegebenenfalls damit synchronisiert ist. Um das Synchronisationsverfahren derart auszugestalten, dass dieses gegen eine eventuelle Frequenzabweichung des Funksignals wenig empfindlich ist, werden in der Mobilstation verschiedene mögliche Sequenzen getestet, indem die Größen $E\{s(t)\cdot s*(t-\tau)\}$ und $E\{s(t)\cdot s*(t)\}$ berechnet werden, wobei $E\{\cdot\}$ den auf eine vorgegebene Integrationszeit (T) berechneten Mittelwert bezeichnet, $\tau$ eine vorgegebene Verzögerung bezeichnet, und $s(t) = r(t) \cdot c(t)$ das Produkt aus dem auf dem Grundband empfangenen Signal $(r(t))$ und dem Wert $(c(t))$ der getesteten Sequenz bezeichnet. Weiterhin wird das Verhältnis $E[s(t)\cdot s*(t-\tau)][l/Es(t)\cdot s*(t)]$ berechnet und die getestete Sequenz ausgewählt, falls das Verhältnis einen vorgegebenen Schwellenwert übersteigt.

Wie die vorstehende Würdigung des Standes der Technik aufzeigt, sind unterschiedlich ausgestaltete Nachrichtenübertragungssysteme für unterschiedliche Anwendungen bekannt. In der Regel beruhen die bekannten Lösungen darauf, Kollisionen zu vermeiden. Weiterhin erfordern diese aufwendige Synchronisationseinrichtungen, insbesondere um zu vermeiden, dass während des Betriebs die Synchronität verloren geht und diese sind zudem für eine Umkonfiguration bei Störungen innerhalb des Netzes nicht geeignet. Selbst wenn Kollisionen zugelassen sind, wie beim Multimedia-Kommunikationsnetzwerk gemäß der US-A-5,917,813, so erfordert dies aufwendige Zugriffsprotokolle und die Identifizierung und Zuordnung erfolgt im Quittungsbetrieb und auf der Basis von Teilnehmeradressen. Dies erfordert entsprechend aufwendige Einrichtungen in der Teilnehmereinrichtung zur Umsteuerung in das und zur Abwicklung des jeweiligen Zugriffsprotokolls. In der Powerline-Kommunikation existieren im Bereich der Niederspannungsversorgung teilweise sehr vermaschte Netze. Zur hochbitratigen Datenübertragung wird ein effizientes bidirektionales Mehrfachzugriffsverfahren benötigt, welches eine flexible Netzstruktur erlaubt, welches nicht einen hohen kostenmäßigen Aufwand für die Synchronisation erfordert, und welches die Funktionssicherheit von Nachrichtenübertragungssystemen entscheidend verbessert.

Der Erfindung liegt gegenüber den bekannten Nachrichtenübertragungs- bzw. Kommunikationssystemen die Aufgabe zugrunde, dieses derart auszugestalten, dass trotz auftretender Kollisionen von Anmeldesignalen die zentrale Steuereinrichtung die sich anmeldenden Teilnehmer detektieren kann.

Diese Aufgabe wird, ausgehend von einem Verfahren zum Vielfachzugriff in einem Kommunikationssystem,

- mit einer einzigen Zentrale und einer Vielzahl von Teilnehmereinrichtungen im Kommunikationsnetzwerk und
- mit einer Datenübertragung unter Verwendung eines gemischten Frequenz- und Zeitmultiplexverfahrens, derart, dass der von der Teilnehmereinrichtung gesendete Zeitrahmen einen Zeitschlitz enthält, in welchem die Teilnehmer der Zentrale einen Sendewunsch mittels teilnehmerspezifische Muster signalisieren können,

gemäß Patentanspruch 1 dadurch gelöst, dass in den Teilnehmereinrichtungen teilnehmerspezifische Muster erzeugt werden, wobei binäre Codewörter für die teilnehmerspezifischen Muster verwendet werden, welche einen Superimposed Code bilden, wobei jedem Teilnehmer ein binäres Codewort ($c^{(k)}$) der binären Codewörter ($c^{(k)}$) fest zugewiesen wird, und dass in der Zentrale für die überlagerten teilnehmerspezifischen Muster sukzessiv Schwellwerttests mit gleitenden Schwellwerten $f_1, f_2, f_3, ...$ basierend auf Entscheidungswerten und/oder auf Verhältnissen von Entscheidungswerten $e_i / e_j$ und auf einem verwendeten Superimposed Code durchgeführt werden, bis entweder die Anzahl von einem Sendewunsch signalisierenden Teilnehmern oder eine nicht auflösbare Kollision detektiert wird, derart, dass bis zu m gleichzeitig übertragende Teilnehmer aufgelöst werden oder die gleichzeitige Anmeldung nicht auflösbare Kollision von mehr als **m** Teilnehmern detektiert wird, und dass nach Maßgabe der detektierten Anzahl die Decodierung erfolgt.

Das erfindungsgemäße Verfahren weist den Vorteil auf, dass auf überraschend einfache Art und Weise Kollisionen von Anmeldesignalen, d.h., das gleichzeitige Nutzen des für die Teilnehmeranmeldung vorgesehenen Zeitschlitzes im TDMA-Rahmenstruktur, in der Zentrale (Master) aufgelöst werden können. Das bedeutet, obwohl im Master überlagerte Signale mehrerer Teilnehmer empfangen werden, kann dieser die einzelnen Teilnehmer detektieren. Das erfindungsgemäße Verfahren steht somit im Gegensatz zu bisherigen Ansätzen, welche darauf beruhen, Kollisionen zu vermeiden. Dabei wird erfindungsgemäß das Signalisierungsproblem als Mehrfachzugriffsschätzproblem betrachtet und da trotz auftretender Kollisionen von Anmeldesignalen der Master die sich anmeldenden Teilnehmern detektieren kann, wird die Betriebssicherheit des Kommunikationssystems entscheidend verbessert. Die Anmeldesignale haben dabei die Eigenschaft eines "weißen" Spektrums, nutzen also die volle Diversität des frequenzselektiven Kanals. Ein weiterer Vorteil des erfindungsgemäßen Verfahrens ist die Robustheit gegenüber frequenzselektiven Dämpfungsverhalten des physikalischen Übertragungskanals. Zur Optimierung des Verfahrens kann beim Systemdesign die Optimierung der Schwellwerte durch Auswertung von für verschiedene Szenerien numerisch ermittelter Wahrscheinlichkeiten erfolgen.

Die Benutzung von reellen teilnehmerspezifischen Signale bei einer M-stufigen orthogonalen Modulation ist aus dem DE-Fachbuch "Nachrichtenübertragung", B.G. Teubner Stuttgart 1996 bekannt. Das Blockschaltbild eines CDMA-Senders mit orthogonaler Walsh-Codierung, wobei eine weitere Spreizung durch die Multiplikation mit dem teilnehmerspezifischen Pseudo-Zufallssignal erfolgt, ist auf Seite 641 und die Demodulation in einem kohärenten CDMA-Empfänger auf Seiten 645 und 646 des DE-Fachbuch "Nachrichtenübertragung" dargestellt und beschrieben.

Weiterhin wird diese Aufgabe von einer Vorrichtung zur Durchführung eines Vielfachzugriffs in einem Kommunikationssystem

- mit einer einzigen Zentrale und einer Vielzahl von Teilnehmereinrichtungen im Kommunikationsnetzwerk und
- mit einer Datenübertragung unter Verwendung eines gemischten Frequenz- und Zeitmultiplexverfahrens, derart, dass der von der Teilnehmereinrichtung gesendete Zeitrahmen einen Zeitschlitz enthält, in welchem die Teilnehmer der Zentrale einen Sendewunsch mittels teilnehmerspezifische Muster signalisieren können,

gemäß Patentanspruch 6, dadurch gelöst, dass zur Erzeugung des teilnehmerspezifischen Musters in der Teilnehmereinrichtung ein Encoder und ein mit diesem verbundener Mapper angeordnet sind, wobei der Encoder derart ausgestaltet ist, dass dem Teilnehmer ein binäres Codewort fest zugewiesen wird und die binären Codewörter einen Superimposed Code bilden und wobei der Mapper derart ausgestaltet ist, dass aus insgesamt n Spreizsequenzen $\xi^i$ der Länge D diejenigen ausgewählt werden, für die im binären Codewort $c_i^{(k)} = 1$ gilt, dass empfangsseitig eine Einrichtung zur Maskierung des überlagerten Empfangssignals vorgesehen ist, welche mit einem Filter verbunden ist, dass mittels einer dem Filter nachgeordneten Einrichtung Entscheidungsvariable gebildet werden, welche in einem Schwellwertentscheider mindestens einmal mit einem gleitendem Schwellwert $f_1$, $f_2$, $f_3$, ... basierend auf Entscheidungswerten und/oder auf Verhältnissen von Entscheidungswerten $e_i / e_j$ und auf einem verwendeten Superimposed Code verglichen werden, bis entweder die Anzahl von einem Sendewunsch signalisierenden Teilnehmern oder eine nicht auflösbare Kollision detektiert wird, derart, dass bis zu m gleichzeitig übertragende Teilnehmer aufgelöst werden oder die gleichzeitige Anmeldung nicht auflösbare Kollision von mehr als m Teilnehmern detektiert wird, und dass die nach Maßgabe der detektierten Anzahl gebildeten Schätzwerte einem Decoder zugeführt werden.

Die erfindungsgemäße Vorrichtung ist ohne großen Aufwand zu implementieren, beispielsweise können die Spreizsequenzen Symbole aus einer 16-stufigen phase-shift keying (PSK) Konstellation enthalten, da PSK ein gängiges Modulationsschema für die digitale Übertragung ist.

Bei einer bevorzugten Ausgestaltung der Erfindung signalisiert, gemäß Patentanspruch 2, ein in der Teilnehmereinrichtung angeordneter Encoder den Sendewunsch $u^{(k)} = 1$ durch ein binäres Codewort, welches dem Teilnehmer fest zugewiesen ist, und ein mit dem Encoder verbundener Mapper und eine diesem nachgeordnete Einrichtung erzeugen - entsprechend der Position eines bestimmten binären Zustands im Codewort - als Sendesignal das teilnehmerspezifische Muster von zyklisch fortgesetzten Spreizsequenzen $\xi^i$.

Diese Ausgestaltung der Erfindung gemäß Patentanspruch 2 weist den Vorteil auf, dass durch die Zuweisung von zyklisch fortgesetzten Spreizsequenzen, beispielsweise orthogonaler Spreizsequenzen, zu den Teilnehmern Interferenzen zwischen verschiedenen Teilnehmern idealerweise völlig eliminiert, d.h., Kollisionen ausgeschlossen werden können. Allerdings ist in diesem Fall die maximale Anzahl $K$ der Teilnehmer durch die Länge der Signatursequenzen über die Länge der Spreizsequenzen $D$ sowie durch die (maximale) Länge der Kanalimpulsantworten $L$ gemäß $K \leq D / L$ restriktiert.

In Weiterbildung der Erfindung erfolgt, gemäß Patentanspruch 3, in der Zentrale die Detektion eines Sendewunsches durch:

- Detektion des gesendeten teilnehmerspezifischen Musters, welches aus der Überlagerung (logische ODER-Verknüpfung) einzelner binärer Codewörter bestehen kann, anhand bestimmter Empfangswerte des überlagerten Empfangssignals (r) nach einer Matched-Filterung für die Signatursequenzen, indem die Energie von Teilvektoren im Vektor der Entscheidungsvariablen gebildet wird und die resultierenden Entscheidungsvariablen (Energiewerte) mit gleitenden Schwellwerten verglichen werden
- Bestimmen der im empfangenen Muster enthaltenen Codewörter bzw. Festellen einer nicht auflösbaren Kollision und
- Ermitteln der zu den detektierten Codewörtern gehörenden Teilnehmer.

Diese Weiterbildung der Erfindung weist den Vorteil auf, dass die Detektionsstrategie auf sukzessiv abzuarbeitenden Zwei-Hypothesen-Vergleichen beruht, wobei ermittelt wird, ob die Entscheidungsvariablen einen Nutzsignalanteil enthalten.

Vorzugsweise liefert der Encoder, gemäß Patentanspruch 4, bei einem Sendewunsch ein binäres Codewort der Länge n, welches dem Teilnehmer fest zugewiesen ist, und bei fehlendem Sendewunsch das Nullwort, weiterhin wählt der Mapper bei einem Sendewunsch aus insgesamt n Spreizsequenzen

$$\xi^{\mathbf{i}} = [\xi_1{}^i, \xi_2{}^i, \ldots, \xi_D{}^i]^T, \ 1 \leq i \leq n,$$

der Länge D diejenigen aus, für die im binären Codewort $c_i^{(k)} = 1$ gilt, und erzeugt als n Ausgangssignal den D-dimensionalen Vektor $\mathbf{v}^{(k)} = \sum_{i=1}^{n} c_i^{(k)} \xi^{\mathbf{i}}$, wobei die Spreizsequenzen $\xi_l^1$ aus dem Bereich der komplexen Zahlen stammen oder erzeugt bei fehlendem Sendewunsch den Nullvektor und dass in der Einrichtung zur Bildung des zeit- und wertdiskreten Sendesignals der Vektor $\mathbf{v}^{(k)}$ durch einen Präfix der Länge L-1 zyklisch ergänzt wird.

In Weiterbildung der Erfindung erfolgt, gemäß Patentanspruch 5, in der Zentrale als erstes in einer Einrichtung eine Maskierung des überlagerten Empfangssignals nach Maßgabe von entnommenen mittleren Empfangswerten und es wird ein Vektor gebildet und der Vektor in einem nachgeordneten Filter mit einer Matrix verknüpft, wobei aus der Filterung ein nLdimensionaler Vektor resultiert, weiterhin wird in einer dem Filter nachgeordneten Einrichtung nach Maßgabe der Energien der Teilvektoren ein n-dimensionaler Vektor mit Entscheidungsvariablen als Koeffizienten gebildet und mittels eines nachgeordneten Schwellwertentscheiders erfolgt die Abbildung des Vektors auf einen binären Vektor und schließlich werden in einem mit dem Schwellwertentscheider verbundenen Decoder durch Decodierung des binären Vektors Schätzwerte gebildet.

Der binäre Vektor am Ausgang des Schwellwertentscheiders resultiert aus der ODER-Verknüpfung von Codewörtern eines Superimposed Codes. Aufgrund der Eigenschaften der Superimposed Codes kann bei der Überlagerung von bis. zu $m \geq 2$ Codewörtern in einer Decodierung auf diese Codewörter und damit die Informationssymbole zurückgeschlossen werden. Überlagern sich mehr als m Codewörter, so kann die Decodierung diese nicht auflösbare Überlagerung erkennen. Somit findet keine Fehldetektion von Codewörtern bzw. Informationssymbolen statt und das erfindungsgemäße Verfahren ermöglicht eine gleichzeitige Anmeldung von bis zu $m \geq 2$ Teilnehmern in einem Kommunikationsnetzwerk. Der Master kann die Anmeldungen auflösen. Bei mehr als m Anmeldungen wird eine Kollision erkannt. Im Fall der Störung der Übertragung durch additives Rauschen (i.a. Empfangereingangsrauschen), sind die Energien für die binären Codeworte nicht identisch 0, wenn das Nullwort gesendet wurde, sondern geben die Rauschleistung an Aus diesem Grund wird erfindungsgemäß der Schwellwert angepasst.

In Weiterbildung der Vorrichtung ist, gemäß Patentanspruch 7, dem Mapper eine Einrichtung zur Erzeugung von zyklisch fortgesetzten Spreizsequenzen als teilnehmerspezifische Muster nachgeordnet.

Diese Weiterbildung der Erfindung weist den Vorteil auf, dass auf einfache Art und Weise eine perfekte Autokorrelation erzeugt werden kann und die Anmeldesignale "weiß" sind (äquivalent zu einem konstanten Amplitudenspektrum).

Weitere Vorteile und Einzelheiten lassen sich der nachfolgenden Beschreibung einer bevorzugten Ausführungsformen der Erfindung unter Bezugnahme auf die Zeichnung entnehmen. In der Zeichnung zeigt:

FIG. 1      ein Blockschaltbild für Sender und Empfänger der erfindungsgemäßen Vorrichtung,

FIG. 2      die Anzahl der Zweier- und Dreiermuster (d.h. genau zwei bzw. drei Anmeldungen) über dem Hamming-Gewicht des Empfangswortes bei ODER-Verknüpfung der Sendecodeworte für den $ZFD_2$ Code basierend auf dem Nordstrom-Robinson-Code,

FIG.      3 die Anzahl der Zweier- und Dreiermuster (d.h. genau zwei bzw. drei Anmeldungen) über dem Hamming-Gewicht des Empfangswortes bei ODER-Verknüpfung der Sendecodeworte für den $ZFD_2$ Code basierend auf binären dem Golay-Code,

FIG. 4      für Test I. die false-alarm-Wahrscheinlichkeit $P_{FA}$ und die komplementäre detection-Wahrscheinlichkeit $1 - P_D$ über dem Schwellwert $f_1$ bzw. $1 - P_D$ für die Fälle b) $w' = 5$, c) $w' = 10$ und d) $w' = 13$,

FIG. 5      für Test I. die detection-Wahrscheinlichkeit $P_D$ über die false-alarm-Wahrscheinlichkeit $P_{FA}$ für die Fälle b) $w' = 5$, c) $w' = 10$ und d) $w' = 13$, wobei zur besseren Auflösung $P_D - 1$ dargestellt und Kurvenparameter der Schwellwert $f_1$ bzw. $P_D$ ist,

FIG. 6      für Test II. false-alarm-Wahrscheinlichkeit $P_{FA}$ und komplementäre detection-Wahrscheinlichkeit $1 - P_D$ über dem Schwellwert $f_2$, $1 - P_D$ für die Fälle b) $w' = 10$, c) $w' = 13$,

FIG. 7      für Test II. detection-Wahrscheinlichkeit $P_D$ über false-alarm-Wahrscheinlichkeit $P_{FA}$, wobei zur besseren Auflösung $P_D - 1$ dargestellt ist; Kurvenparameter ist der Schwellwert $f_2$, $P_D$ für die Fälle b) $w' = 10$ und c) $w' = 13$,

FIG. 8      für Test III. die false-alarm-Wahrscheinlichkeit $P_{FA}$ und komplementäre detection-Wahrscheinlichkeit $1 - P_D$ über dem Schwellwert $f_3$,

FIG. 9      für Test III. die detection-Wahrscheinlichkeit $P_D$ über false-alarm-Wahrscheinlichkeit $P_{FA}$ mit $f_3$ als Parameter, wobei zur besseren Auflösung $P_D - 1$ dargestellt ist,

FIG. 10      für Test IV. die false-alarm-Wahrscheinlichkeit $P_{FA}$ und komplementäre detection-Wahrscheinlichkeit $1 - P_D$ über dem Schwellwert $f_4$, $P_D$ für die Fälle b) $w' = 9$ und c) $w' = 10$,

FIG. 11      für Test IV. die detection-Wahrscheinlichkeit $P_D$ über false-alarm-Wahrscheinlichkeit $P_{FA}$; zur besseren . Auflösung ist $P_D - 1$ dargestellt, Kurvenparameter ist der Schwellvert $f_4$,

FIG. 12      für Test V. die false-alarm-Wahrscheinlichkeit $P_{FA}$ und komplementäre detection-Wahrscheinlichkeit $1 - P_D$ über dem Schwellwert $f_5$,

FIG. 13      für Tests V. die detection-Wahrscheinlichkeit $P_D$ über false-alarm-Wahrscheinlichkeit $P_{FA}$; Zur besseren Auflösung ist $P_D - 1$ dargestellt, Kurvenparameter ist der Schwellwert $f_5$,

FIG. 14      für den modifizierten Test I. die false-alarm-Wahrscheinlichkeit $P_{FA}$ und die komplementäre detection-Wahrscheinlichkeit $1 - P_D$ über dem Schwellwert $f_{1,mod}$,

FIG. 15      für den modifizierten Test II. die false-alarm-Wahrscheinlichkeit $P_{FA}$ und die complementäre detection-Wahrscheinlichkeit $1 - P_D$ über dem Schwellwert $f_{2,mod}$ und

FIG. 16      die analytisch gerechnete und simulierte Wahrscheinlichkeiten $P_D$ und $P_{FA}$. Links: $P_D$ für Test II mit $w' = 13'$. Rechts: $P_{FA}$ für Test III.

Das erfindungsgemäße Verfahren und die Vorrichtung zur Realisierung des Verfahrens zur Anmeldung von Teilnehmern wird im folgenden für den Einsatz in einem Powerline-Kommunikationsnetzwerk näher beschrieben und erläutert. Ausführlich wird dabei die Festlegung einer Kette von sukzessiv durchzuführenden Schwellwerttests sowie die Optimierung der Schwellwerte erläutert und anhand einer Rechnersimulation für ein Netzwerk mit maximal 42 Teilnehmer die Schwellwertoptimierung für verschiedene Anmeldeszenerien aufgezeigt. Wie umfangreiche Untersuchungen und Simulationen ergeben haben, kann die Annahme eines zeit-invarianten Kanals dahingehend relaxiert werden, dass nur die Energie der Impulsantwort konstant ist. Dies entspricht einer Sendeleistungsadaption an die (mittlere) Dämpfung des Übertragungskanals, welche bei Power-Line-Kommunikation als realistisch angesehen werden kann

In der TDMA-Rahmenstruktur für die OFDM-Übertragung über Power-Line ist ein Zeitrahmen für die Netzwerkanmeldung von Teilnehmern bei der zentralen Vermittlungsstelle vorgesehen. Innerhalb dieses Zeitrahmens kann jeder Teilnehmer eine Anmeldung vornehmen. Es erfolgt keine Ordnung der bzw. Synchronisation zwischen verschiedenen Teilnehmern. Somit kann der Fall eintreten, dass mehrere Teilnehmer gleichzeitig eine Anmeldung versuchen, d.h., dass Kollisionen auftreten:

Das erfindungsgemäße Anmeldeverfahren kann bis zu einem bestimmten Grad Kollisionen auflösen. Dabei wird das Signalisierungsproblem als Mehrfachzugriffsschätzproblem betrachtet. Beim Spezialfall "Zuweisung orthogonaler Spreizsequenzen zu den Teilnehmern" können Interferenzen zwischen verschiedenen Teilnehmern idealerweise völlig eliminiert, d.h., Kollisionen ausgeschlossen werden. Die weiteren Ausführungen betrachten digitale Übertragung im äquivalenten komplexen Basisband. Weiterhin wird eine zeitdiskrete Darstellung der Signale und Systeme gewählt.

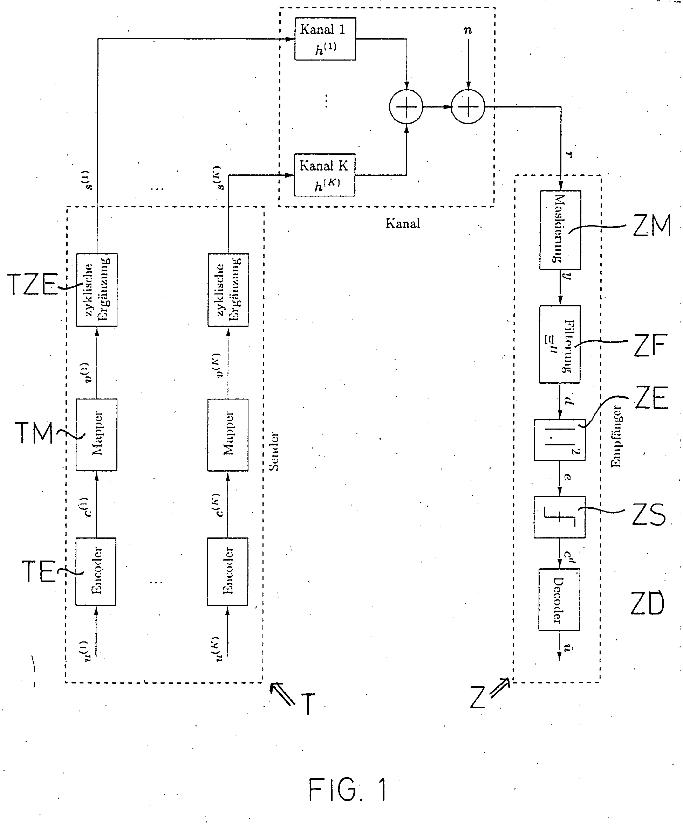

Der schematische Aufbau der Sender-Empfänger-Situation ist in FIG. 1 dargestellt. Zur Erzeugung des Sendesignals $s^{(k)}$ sind in der Teilnehmereinrichtung T ein Encoder TE und ein mit diesem verbundener Mapper TM angeordnet. Weiterhin ist dem Mapper TM eine Einrichtung TZE zur Erzeugung von zyklisch fortgesetzten Spreizsequenzen $\xi^i$ als teilnehmerspezifische Muster $\mathbf{v}^{(k)}$ nachgeordnet.

Empfangsseitig ist im Empfänger der Zentrale Z eine Einrichtung ZM zur Maskierung des überlagerten Empfangssignals r vorgesehen, welche mit einem Filter ZF verbunden ist: Mittels einer dem Filter ZF nachgeordneten Einrichtung ZE werden Entscheidungsvariable $e_i$ gebildet, welche in einem Schwellwertentscheider ZS mindestens einmal mit einem gleitendem Schwellwert verglichen werden. Schließlich werden die so gebildeten Schätzwerte $\hat{u}$ einem Decoder ZD zugeführt. Das erfindungsgemäße Verfahren wird nachfolgend kurz beschrieben:

- $u^{(k)} \in \{0,1\}$, $1 \le k \le K$, ist die Information, welche der Teilnehmer $T^k$ während des Anmeldezeitschlitzes sendet. Ist $u^{(k)} = 1$, so wird eine Anmeldung signalisiert. Ist $u^{(k)} = 0$, so wird kein Anmeldesignal gesendet bzw. kann dies als Senden des "Nullsignals" interpretiert werden.

- Für $u^{(k)} = 1$ liefert der Encoder TE ein binäres Codewort $\mathbf{c}^{(k)} = [c^{(k)}1, c^{(k)}_2, ... , c^{(k)}_n]^T$ der Länge n, welches dem Teilnehmer $T^k$ fest zugewiesen ist. Für $u^{(k)} = 0$ liefert der Encoder TE das Nullwort.

- Der Mapper TM wählt aus insgesamt n Spreizsequenzen $\xi^i = [\xi_1^i, \xi_2^i, ... , \xi_D^i]^T$, $1 \le i \le n$, der Länge D diejenigen aus, für die $c_i^{(k)} = 1$ gilt. Als Ausgangssignal folgt der D-n dimensionale Vektor $\mathbf{v}^{(k)} = \sum_{i=1}^{n} c_i^{(k)} \xi^i$. Falls $u^{(k)} = 0$ gilt, so ist $v^{(k)}$ der Nullvektor. Die Elemente $\xi_1^i$ stammen i.a. aus dem Bereich der komplexen Zahlen.

- Zur Bildung des zeit- und wertdiskreten Sendesignals $s^{(k)}$ wird $v^{(k)}$ durch einen Präfix der Länge L-1 zyklisch ergänzt.

- Das Sendesignal $\mathbf{s}^{(k)}$ vom Teilnehmer $T^k$, bestehend aus dem teilnehmerspezifischen Muster von zyklisch fortgesetzten Spreizsequenzen, wird über einen Kanal mit der zeitdiskreten Impulsantwort $\mathbf{h}^{(k)} = [h_1^{(k)}, h_2^{(k)}, ... , h_L^{(k)}]^T$ der Länge L übertragen; es werden also dispersive Kanäle betrachtet. Die Koeffizienten der Impulsantwort sind ebenfalls i.a. komplexwertig. Durch die Faltung des Sendesignals der Länge D+L-1 mit der Kanalimpulsantwort der Länge L resultiert ein verzerrtes Signal der Länge D+2(L-1).

- Die Sendesignale überlagern sich additiv. Des weiteren erfolgt i.a. eine additive Störung am Empfängereingang der Zentrale Z, welches durch den Vektor n symbolisiert ist. Das Empfangssignal ist mit $\mathbf{r} = [r_1, r_2, ... , r_{D+2(L-1)}]^T$ bezeichnet.

- Im Empfänger der Zentrale Z erfolgt als erstes eine Maskierung des überlagerten Empfangssignals $\mathbf{r}$ in der Einrichtung ZM derart, dass aus den D+2(L-1) Empfangswerten die mittleren D Werte entnommen werden. Diese werden im Vektor $\mathbf{y} = [y_1,y_2,...,yD]^T$ zusammengefasst. Die ersten sowie letzten L-1 Empfangswerte werden nicht weiter betrachtet.

- Die entnommenen D Werte $\mathbf{y}$ werden im Filter ZF an der Matrix $\Xi^H$ gefiltert. Dabei enthält die (D×nL)-dimensionale Matrix $\Xi$ als Spalten die Spreizsequenzen $\xi^i$, $1 \le i \le n$, sowie alle um bis zu L-1 Koeffizienten zyklisch verschobenen Versionen der Spreizsequenzen. Aus der Filterung resultiert der nL-dimensionale Vektor $\mathbf{d} = [d_1^T, d^T_2, ... , d^T_n]^T$, welcher wiederum als Zusammenfassung von n L-dimensionalen Vektoren $d_i$, $1 \le i \le n$, aufgefasst wird.

- Anschließend werden in der Einrichtung ZE die Energien der Teilvektoren $\mathbf{d}_i$, $1 \le i \le n$, bestimmt und den Koeffizienten $e_i$ zugewiesen. Es resultiert der n-dimensionale Vektor $\mathbf{e} = [e_1, e_2, ... , e_n]^T$.

- Mittels des Schwellwertentscheiders ZS erfolgt die Abbildung des Vektors $\mathbf{e}$ auf einen binären Vektor $\mathbf{c}^d$, welcher einen Schätzwert für die Überlagerung von K Wörtern $u^{(k)} \cdot \mathbf{c}^{(k)}$ bildet.

- Durch Decodierung von $\mathbf{c}^d$ im Decoder ZD folgen die Schätzwerte $\hat{u} = [\hat{u}^{(1)}, \hat{u}^{(2)}, ... , \hat{u}^{(k)}]^T$ für die Sendedaten $u^{(k)}$, $1 \le k \le K$. Ist $\hat{u}^{(k)} = 1(0)$ so wird auf eine (keine) Anmeldung vom Teilnehmer $T^k$ geschlossen.

Die Rahmenbedingungen für die effiziente Funktionsweise des erfindungsgemäßen Anmeldeverfahrens sind wie folgt:

- Die Spreizsequenzen $\xi^i$ müssen sowohl untereinander als auch bezüglich ihrer um maximal L-1 Werte zyklisch verschobenen Versionen orthogonal sein. Mit $\xi^i_l$, d.h. die um $l$ Elemente nach rechts zyklisch verschobene Version von $\xi$, d.h. $\xi^i_l = [\xi^i D-l+1, \xi^i D, \xi^i l, \dots \xi^i D-l]^T$, ist die Orthogonalitätsbedingung gemäß Gleichung (1):

$$(\xi^i)^H \cdot \xi^j_l \quad = \quad \delta[i-j] \cdot \delta[l] \tag{1}$$

$$i, j = 1, 2, \dots, n$$

$$l = 0, 1, \dots, L-1 \ .$$

$\delta[i]$ ist der diskrete Einheitsimpuls, $\delta[i] = 1$ für $i = 0$, $\delta[i] = 0$ für $i \neq 0$.

- Aus obiger Forderung der Orthogonalität folgt eine obere Schranke für die Codewortlänge n gemäß Gleichung (2):

$$n \leq \quad \frac{D}{L} \ . \tag{2}$$

- Als Lösung von Gleichung (1) werden Spreizsequenzen $\xi^i$ gemäß

$$\xi^{(1)} \quad = \quad [a_1, a_2, \dots, a_D]^T$$

$$\xi^{(2)} \quad = \quad [a_{D-L-1}, \dots, a_D, a_1, \dots, a_{D-L-2}]^T$$

$$\xi^{(3)} \quad = \quad [a_{D-2L-1}, \dots, a_D, a_1, \dots, a_{D-2L-2}]^T \tag{3}$$

$$\vdots$$

$$\xi^{(n)} \quad = \quad [a_{D-(n-1)L-1}, \dots, a_D, a_1, \dots, a_{D-(n-1)L-2}]^T$$

gewählt. Die Folge $\mathbf{a} = [a_1, a_2, \dots, a_D]^T$ hat dabei eine perfekte periodische Autokorrelationsfunktion (siehe Gleichung (4)):

$$\mathbf{a} \ \otimes \ \mathbf{a} = \delta[0] \ , \tag{4}$$

wobei $\otimes$ die zyklische Faltung notiert. Die Spreizsequenzen $\xi^i$ sind dabei um L Elemente zyklisch verschobene Versionen $\mathbf{a}$. Die Eigenschaft der perfekten Autokorrelation ist äquivalent zu einem konstanten Amplitudenspektrum, d.h., die Anmeldesignale sind "weiß".

Die Matrix $\Xi$ ist somit gemäß nachfolgender Gleichung (5) definiert:

$$\Xi = [\xi^{(1)}_0, \xi^{(1)}_1, \ldots, \xi^{(n)}_{L-2}, \xi^{(n)}_{L-1}];$$

$$\Xi = \begin{bmatrix} a_1 & a_D & \ldots & a_{D-nL+1} & a_{D-nL} \\ a_2 & a_1 & \ldots & a_{D-nL+2} & a_{D-nL+1} \\ \vdots & \vdots & & \vdots & \vdots \\ a_{nL-1} & a_{nL-2} & \ldots & a_1 & a_D \\ \vdots & \vdots & & \vdots & \vdots \\ a_D & a_{D-1} & \ldots & a_{D-nL} & a_{D-nL-1} \end{bmatrix} \tag{5}$$

Die Folgen **a** können entweder im Zeit- oder im Frequenzbereich spezifiziert werden. Beispiele sind im Fachbuch von H.D. Lüke: Korrelationssignale. Springer-Verlag, Berlin. 1992 zu finden.

Die binären Codewörter $c^{(k)}$ bilden einen sogenannten Superimposed Code. Die Codewortlänge ist n und die Anzahl der Codewörter K. Damit kann jedem Teilnehmer $T^k$ ein spezifisches Codewort zugewiesen werden.

Die Superimposed Codes wurden vor langer Zeit in der Fachzeitschrift IEEE Transactions on Information Theory (10), pp. 363-377, October, 1964 von W.H. Kautz, R.C. Singleton: Nonrandom Binary Superimposed Codes systematisch eingeführt und zeichnen sich dadurch aus, dass bei der elementweisen ODER-Verknüpfung von bis zu m ≥ 2 Codewörtern anhand des resultierenden Wortes eindeutig auf die originären Codewörter zurückgeschlossen werden kann. Diese bislang völlig unbeachtete gebliebene Eigenschaft, welche beim erfindungemäßen Verfahren in vorteilhafter Weise ausgenutzt wird, führt dazu, dass bei der Verknüpfung von mehr als m Codewörtern eine Nichtauflösbarkeit bezüglich der beteiligten Codewörter erkannt wird.

Die Funktionsweise des erfindungemäßen Anmeldeverfahrens wird nun im einzelnen erläutert. Dabei wird von der Übertragung von $s^{(k)}$ nach **r** ausgegangen. Weiterhin soll zur Funktionsbeschreibung die Rauschstörung **n** vorübergehend außer Acht gelassen werden, d.h., es wird nur die Nutzübertragung betrachtet.

1. Durch die zyklische Fortsetzung im Sender und die Maskierung im Empfänger wird die lineare Faltung von $s^{(k)}$ mit $h^{(k)}$ in eine zyklische Faltung überführt. Mit den zyklischen Kanalmatrizen gemäß Gleichung (6)

$$
\mathbf{H}^{(k)} = \begin{bmatrix} h_1^{(k)} & h_2^{(k)} & \dots & h_L^{(k)} & & 0 \\ & & & & & \\ & & & & & h_L^{(k)} \\ & & & & & \\ h_L^{(k)} & & 0 & & & \vdots \\ & & & & & \\ & \vdots & & & & h_2^{(k)} \\ h_2^{(k)} & \dots & h_L^{(k)} & & & h_1^{(k)} \end{bmatrix} \tag{6}
$$

lässt sich der Zusammenhang zwischen y und $\mathbf{v}^{(k)}$, $1 \le k \le K$, kompakt schreiben (siehe

$$
\mathbf{y} = \sum_{k=1}^{K} (\mathbf{H}^{(k)})^T \mathbf{v}^{(k)} , \tag{7}
$$

Gleichung (7)). Mit

$$\mathbf{V}^{(k)} = \begin{bmatrix} v_1^{(k)} & v_D^{(k)} & \ldots & v_{D-L+3}^{(k)} & v_{D-L+2}^{(k)} \\ v_2^{(k)} & v_1^{(k)} & \ldots & v_{D-L+4}^{(k)} & v_{D-L+3}^{(k)} \\ \vdots & \vdots & & \vdots & \vdots \\ v_{L-1}^{(k)} & v_{L-2}^{(k)} & \ldots & v_1^{(k)} & v_D^{(k)} \\ \vdots & \vdots & & \vdots & \vdots \\ v_D^{(k)} & v_{D-1}^{(k)} & \ldots & v_{D-L+2}^{(k)} & v_{D-L+1}^{(k)} \end{bmatrix} \qquad (8)$$

als Matrix mit $\mathbf{v}^{(k)}$ (siehe Gleichung (8)) sowie zyklisch verschobenen Versionen von $\mathbf{v}^{(k)}$ als Spaltenvektoren kann Gleichung (7) elementar zu

$$\mathbf{y} = [\mathbf{V}^{(1)}, \mathbf{V}^{(2)}, \ldots, \mathbf{V}^{(K)}] \cdot \begin{bmatrix} \mathbf{h}^{(1)} \\ \mathbf{h}^{(2)} \\ \vdots \\ \mathbf{h}^{(K)} \end{bmatrix} \qquad (9)$$

umgeformt werden (siehe Gleichung (9)).

2. Nach der Filterung von,y mit $\Xi^H$ folgt der nL-dimensionale Vektor d

$$\mathbf{d} = \Xi^H \cdot \mathbf{y} \ . \qquad (10)$$

Dieser Vektor d (siehe Gleichung (10)) wird in vorteilhafter Weise in n Teilvektoren der Länge L gemäß nachfolgender Gleichung (11) zerlegt:

$$\mathbf{d} = [\mathbf{d}_1^T, \mathbf{d}_2^T, \ldots, \mathbf{d}_n^T]^T \ . \qquad (11)$$

Durch die Orthogonalitätsbedingung (1) für die Spreizsequenzen und ihre zyklisch verschobenen Versionen folgen aus Gleichungen (10) und (9) diese Teilvektoren gemäß Gleichung (12) zu

$$d_i = \sum_{k=1}^{K} u^{(k)} c_i^{(k)} \mathbf{h}^{(k)} \ , \quad 1 \le i \le n \ . \tag{12}$$

3. Die n Koeffizienten des Vektors e enthalten jeweils die Energie der Teilvektoren $d_i$:

$$e_i = \mathbf{d}^H_i \mathbf{d}_i \ , \quad 1 \le i \le n \ . \tag{13}$$

Wenn nun ein $c_i^{(k)}$ für $1 \le k \le K$ identisch 1 ist, also wenn ein oder mehrere Teilnehmer sich anmelden und ein oder mehrere der korrespondierenden Codewörter an der Position i eine 1 aufweisen, dann ist die Summe gemäß Gleichung (12) für dieses i ungleich Null und $\mathbf{d}_i$ repräsentiert die Summe von Kanalimpulsantwortkoeffizienten. Die Energie $e_i$ von $\mathbf{d}_i$ ist dementsprechend relativ hoch.

Andererseits, wenn keines der Codewörter der sich anmeldenden Teilnehmer an der Position i eine 1 hat, so ist $\mathbf{d}_j$ der Nullvektor und $e_i$ identisch 0.

4. Der Schwellwertentscheider ZS liefert den binären Vektor $\mathbf{c}^d$. Mit dem Schwellwert $f$ gilt:

$$c_i^d = \begin{cases} 1 \ , & \text{wenn } e_i > f \\ 0 \ , & \text{wenn } e_i \le f \end{cases} \ , \quad 1 \le i \le n \ . \tag{14}$$

Entsprechend den obigen Ausführungen folgt mit $f > 0$

$$\mathbf{c}^d = u^{(1)} \mathbf{c}^{(1)} \vee u^{(2)} \mathbf{c}^{(2)} \vee \ldots \vee u^{(K)} \mathbf{c}^{(K)} \ , \tag{15}$$

wobei $\vee$ den ODER-Operator bezeichnet.

5. Der Vektor $\mathbf{c}^d$ resultiert aus der ODER-Verknüpfung von Codewörtern eines Superimposed Codes. Aufgrund der Eigenschaften der Superimposed Codes kann bei der Überlagerung von bis zu $m \ge 2$ Codewörtern in einer Decodierung im Decoder ZD auf diese Codewörter und damit die Informationssymbole $u^{(k)}$ zurückgeschlossen werden. Überlagern sich mehr als m Codewörter, so kann der Decoder ZD diese nicht auflösbare. Überlagerung erkennen, d.h. es findet keine Fehldetektion von Codewörtern $\mathbf{c}^{(k)}$ bzw. Informationssymbolen $u^{(k)}$ statt.

6. Somit ermöglicht das neue Verfahren eine gleichzeitige Anmeldung von bis zu $m \ge 2$ Teilnehmern in einem Kommunikationsnetzwerk. Der Master kann die Anmeldungen auflösen. Bei mehr als m Anmeldungen wird eine Kollision erkannt.

7. Im Fall der Störung der Übertragung durch additives Rauschen (i.a. Empfängereingangsrauschen), sind die Energien $e_i$ für $c_i^{(k)} = 0$, Vk, nicht identisch 0, sondern geben die Rauschleistung an. Aus diesem Grund wird erfiridungsgemäß der Schwellwert $f > 0$ gewählt und angepasst.

Wie umfangreiche Untersuchungen ergeben haben, können verschiedene Schwellwertentscheidungsstrategien sowie Schwellwertoptimierungen, beispielsweise kaskadierte Schwellwertentscheidungen mit gleitenden Schwellwerten, vorgenommen werden. Nachfolgend wird für zwei Ausführungsformen die Dimensionierung der jeweiligen Kenngrößen unter Berücksichtigung der Anforderungen an das Anmeldeverfahren sowie von Annahmen über das Übertragungsmedium beschrieben:

- Der frequenzselektive Kanal ist durch eine zeitdiskrete Impulsantwort mit der maximalen Länge L = 15 ("worst case") beschrieben.
- Im Kommunikationsnetzwerk sind maximal 40 Teilnehmer T zugelassen.
- Es sollen sich in einem Signalisierungszeitschlitz maximal m = 2 Teilnehmer T gleichzeitig anmelden können.
- Die Spreizsequenzen sollen Symbole aus einer 16-stufigen phase-shift keying (PSK) Konstellation enthalten, da PSK ein gängiges Modulationsschema für die digitale Übertragung ist. D.h., $\xi_i^l \in \{e^{j[2\pi/16]m}, 0 \le m \le 15\}$, $1 \le l \le D$, $1 \le i \le n$.
- Ein Superimposed Code mit größer gleich 40 Codewörtern und m = 2 ist z.B. aus A.E. Brouwer, J.B. Shearer, N.J.A. Sloane, W.D. Smith: A New Table of Constant Weight Codes. IEEE Transactions on Information Theory, (36), pp. 1334-1380, November, 1990. zu entnehmen.
- Der um ein Codesymbol verkürzte Nordstrom-Robinson-Code der Länge 16 ist ein Superimposed Code der Länge n = 15 mit 42 Codewörtern, d.h., das Netzwerk kann sogar aus bis zu 42 Teilnehmer bestehen.

Mit n = 15 folgt aus Gleichung (2) eine Länge der Spreizsequenzen von D $\ge$ 225. Mit der Wahl D = 256 können Frank-Folgen aus

H.D. Lüke: Korrelationssignale. Springer-Verlag, Berlin. 1992.

als Folge **a** verwendet werden. Die Frank-Folgen haben die geforderten Autokorrelationseigenschaften. Für D = 256 stammen ihre Elemente aus einer 16-stufigen PSK Konstellation. Gemäß Gleichung (3) resultieren die Spreizsequenzen. mit 16-stufigen PSK Symbolen.

Wie vorstehende Ausführungen aufzeigen, ist es kaum möglich, einen absoluten Schwellenwert so zu finden, dass in allen relevanten Szenerien, keine Anmeldung, genau eine Anmeldung, mehr als eine Anmeldung, mit sehr hoher Wahrscheinlichkeit richtig detektiert wird. Vielmehr erweist sich die Verwendung eines fixen absoluten Schwellwertes als sehr problematisch. Deshalb wird erfindungsgemäß eine Detektionsstrategie basierend auf Verhältnissen von Entscheidungswerten benutzt.

Um festzulegen, welche Verhältnisse zu testen sind und mit welchen Schwellwerten der Vergleich durchzuführen ist, ist es sinnvoll, die in der Praxis möglichen Hypothesen zu betrachten. Die Codierung für die Anmeldeproblematik mittels der Superimposed Codes ist in dem obigen Ausführungsbeispiel so ausgelegt, dass die Anmeldung von keinem, genau einem und genau zwei Teilnehmern erkannt und aufgelöst sowie die Anmeldung von mehr als zwei Teilnehmern erkannt werden können. Dementsprechend können bei der Schwellwertdetektion folgende Hypothesen getestet werden:

1. Liegt genau eine Anmeldung vor?
2. Melden sich genau zwei Teilnehmer an?
3. Melden sich mehr als zwei Teilnehmer an?

Wenn dieser Mehr-Hypothesen-Test in der Schwellwertdetektion erfolgreich durchgeführt werden kann, so vereinfacht sich auch die nachfolgende Bestimmung der Anmelder, da schon eine Vorauswahl über die Anzahl der simultanen Anmeldungen getroffen ist.

Als zu testenden Verhältnisse $e_i/e_j$, $i \ne j$, bieten sich die $e_i$ und $e_j$ an, die unter der jeweiligen Hypothese zu $e_i = 1$ und $e_j = 0$ angenommen sind. Wenn $e_j = 0$ tatsächlich zutrifft, so erreicht dieses Verhältnis $e_i/e_j$ für $e_i = 1$ einen relativ großen Wert und für $e_i = 0$ einen relativ kleinen Wert.

Um die Anzahl der notwendigen Tests von $e_i/e_j$ gegen bestimmte Schwellwerte einzuschränken, können erfindungsgemäß die Entscheidungsvariablen bezüglich ihrer Größe geordnet werden (Entscheidungsvektor mit permutierten Elementen und Detektion auf Empfangsworte $c^d$ mit verschiedenen Hamming-Gewicht).

Wie Untersuchungen aufgezeigt haben, kann nicht allein anhand des Gewichtes des Empfangswortes $c^d$ nach der Detektion geschlussfolgert werden, ob keiner, genau einer, genau zwei oder mehr als zwei Anmeldungen vorliegen.

Für die ersten beiden Fälle (siehe Ziffer 1. und Ziffer 2 des.Mehr-Hypothesen-Tests) ist dies natürlich gegeben, da bei keiner bzw. genau einer Anmeldung das Empfangsgewicht identisch 0 bzw. w ist.

Bei der gleichzeitigen Anmeldung von zwei Teilnehmern kann das Empfangsgewicht $w(c^d)$ prinzipiell zu

$$\frac{w+1}{2} + \lambda_{\max} + \frac{w+1}{2} \leq \quad w(\boldsymbol{c}^d) \quad \leq 2w$$

$$\frac{3w+1}{2} \leq \quad w(\boldsymbol{c}^d) \quad \leq 2w$$

abgeschätzt werden, wobei $\lambda_{\max} \geq (w-1)/2$ die maximale Überlappung zwei Codewörter bezeichnet.

Bei $\alpha > 2$ gleichzeitigen Anmeldungen führt nachfolgende Abschätzung auf

$$\underbrace{\frac{w+1}{2} + \lambda_{\max} + \frac{w+1}{2}}_{2 \text{ Codewörter}} + \underbrace{w - 2\lambda_{\max}}_{3.\text{Codewort}} \leq \quad w(\boldsymbol{c}^d) \quad \leq a \cdot w$$

$$2w + 1 - \lambda_{\max} \leq \quad w(\boldsymbol{c}^d) \quad \leq a \cdot w$$

$$\frac{3w+3}{2} \leq \quad w(\boldsymbol{c}^d) \quad \leq a \cdot w \text{ wenn } \lambda_{\max} = \frac{w-1}{2}.$$

Falls also $2w < (3w+3)/2$, so können "Einermuster" (genau eine Anmeldung) und "Zweiermuster" (genau zwei Anmeldungen) eindeutig aufgrund des Hamming-Gewicht des Empfangswortes detektiert werden.

Falls dies nicht zutrifft, so ist weiterhin festzustellen, welche Empfangsgewichte abhängig von der Zahl gleichzeitiger Anmeldungen überhaupt auftreten können.

Fall A: ZFD$_2$ Code basierend auf Nordstrom-Robinson-Code

Es gilt:

$$w = 5, \ \lambda_{\max} = 2 \ \Rightarrow \ 2w = 10 > 9 = \frac{3w+3}{2}.$$

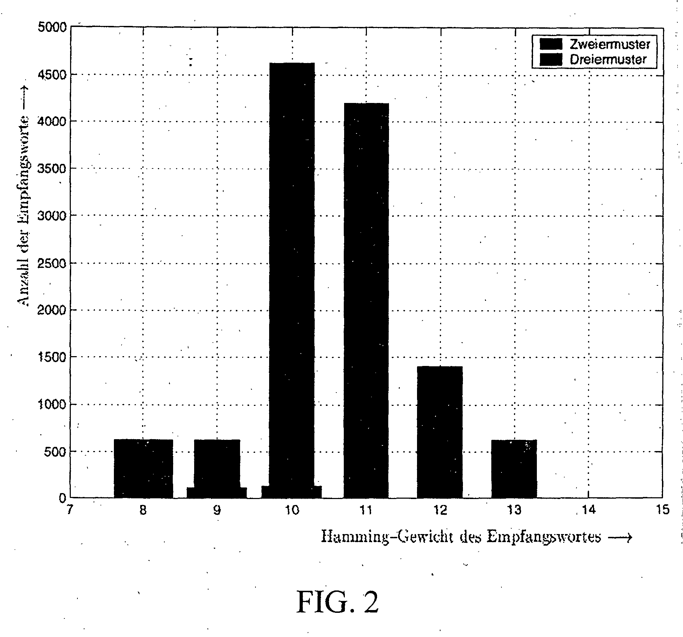

Somit folgt aus der obigen Abschätzung nicht, dass Zweiermuster anhand der Anzahl der Einsen im Empfangswort erkannt werden können. Ein Auszählen der Anzahl der Einsen in Zweiermustern und Dreiermustern ergibt die in FIG. 2 dargestellte Verteilung, welche die Anzahl der Zweier- und Dreiermuster (d.h. genau zwei bzw. drei Anmeldungen) über dem Hamming-Gewicht des Empfangswortes bei ODER-Verknüpfung der Sendecodeworte für den ZFD$_2$ Code basierend auf Nordstrom-Robinson-Code beschreibt.

Wie FIG. 2 aufzeigt, überlappen sich tatsächlich die Empfangsgewichte für zwei bzw. drei gleichzeitige Anmeldungen. Das bedeutet, dass i.a. aus dem Hamming-Gewicht des detektierten Empfangswortes $c^d$ nicht eindeutig auf die Anzahl der Anmeldungen geschlossen werden kann.

Jedoch ist aus der FIG. 2 zu entnehmen, dass für den betrachteten Superimposed Code auf Empfangsgewichte $w(c^d) = 8, 9, 10$ zu testen ist, da dies die bei zwei gleichzeitigen Anmeldungen möglichen Fälle sind. Weiterhin ist festzuhalten, dass Empfangsgewichte $w(c^d) > 13$ relativ unwahrscheinlich sind, da hierfür vier oder mehr gleichzeitige Anmeldungen stattfinden müssen.

Fall B: ZFD$_2$ **Code basierend auf binären Golay-Code**

Für den aus dem binären Golay-Code abgeleiteten ZFD$_2$ Code gilt:

$$w = 7, \quad \lambda_{\max} = 3 \quad \Rightarrow \quad 2w = 14 > 12 = \frac{3w+3}{2}.$$

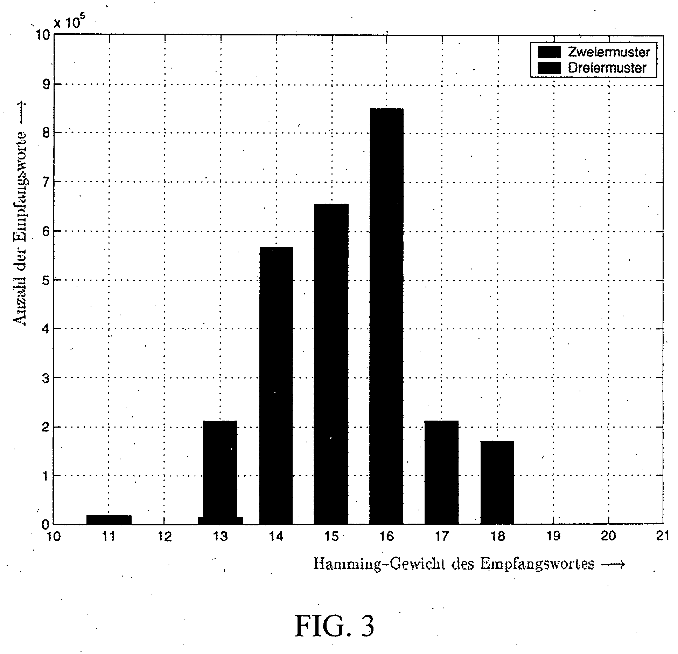

Auch hier folgt aus der obigen Abschätzung nicht, dass Zweiermuster anhand der Anzahl der Einsen im Empfangswort erkannt werden können. Die Anzahl der Einsen in Zweiermustern und Dreiermustern (d.h. genau zwei bzw. drei Anmeldungen) über dem Hamming-Gewicht des Empfangswortes bei ODER-Verknüpfung der Sendecodeworte für den $ZFD_2$ Code basierend auf binären Golay-Code ist in FIG. 3 gezeigt. Es gibt sowohl Zweier- als auch Dreiermuster mit Gewicht 13. Bei genau diesem Hamming-Gewicht des detektierten Empfangswortes $c^d$ kann nicht eindeutig auf die Anzahl der Anmeldungen geschlossen werden. Dementsprechend ist bei diesem Superimposed Code nur auf die Empfangsgewichte $w(c^d) = 11, 13$ zu testen. Weiterhin sind Empfangsgewichte $w(c^d) > 18$ relativ unwahrscheinlich, da hierfür vier oder mehr gleichzeitige Anmeldungen stattfinden müssen.

Anhand der vorangegangenen Betrachtungen soll nun für die beiden oben genannten $ZFD_2$, Codes (Fall A und Fall B) die Detektionsstrategie explizit angegeben werden. Dabei wird das Mehr-Hypothesen Problem in sukzessiv abzuarbeitenden Zwei-Hypothesen-Probleme separiert. Die grundsätzliche Struktur ist in nachfolgender Tabelle 1 dargestellt, welche die Detektionsstrategie für die Anmeldeproblematik und die sukzessive Durchführung von Schwellwerttests anhand des geordneten Entscheidungsvektors $e'$, der Schwellwerte $f_1$, $f_2$, $f_3$ und der inverse Permutation zur Ordnung der Entscheidungsvariablen $\Pi^{-1}$ aufzeigt. $f_1$, $f_2$, $f_3$ sind reelle Schwellwerte und $\Pi^{-1}$ notiert die inverse Permutation, welche für die Ordnung der Entscheidungsvariablen $e_i$ entsprechend der Größe durchgeführt wurde $(\Pi^{-1}(\Pi^{(i)})) = i$.

| Test I | $e'_{n-w+1}/e'_s > f_1$? | | | |
|---|---|---|---|---|
| | ja | | | nein |
| Test II | $e'_{n-w}/e'_s > f_2$? | | | keine Anmeldung |
| | ja | | nein | |
| Test III | $e'_{n-w_{max2}}/e'_s > f_3$? | | genau eine Anmeldung | |
| | ja | nein | | |
| Test IV | mehr als zwei Anmeldungen | vielleicht zwei Anmeldungen *weitere Tests* | | |
| Detektion | keine Auflösung möglich | $c^d_{\pi^{-1}(n)} = 1$ $\vdots$ $c^d_{\pi^{-1}(n-w)} = 1$ $c^d_{\pi^{-1}(n-(w+1))} = ?$ $\vdots$ $c^d_{\pi^{-1}(n-w_{max2}+1)} = ?$ $c^d_{\pi^{-1}(n-w_{max2})} = 0$ $\vdots$ $c^d_{\pi^{-1}(1)} = 0$ | $c^d_{\pi^{-1}(n)} = 1$ $\vdots$ $c^d_{\pi^{-1}(n-w+1)} = 1$ $c^d_{\pi^{-1}(n-w)} = 0$ $\vdots$ $c^d_{\pi^{-1}(1)} = 0$ | $c^d_{\pi^{-1}(n)} = 0$ $\vdots$ $c^d_{\pi^{-1}(1)} = 0$ |

Im Test I wird überprüft, ob der $w$-größte Wert größer als $f_1$ mal der $s$-kleinste Wert ist. Dabei ist $s$ so zu wählen, dass der $s$-kleinste Wert mit sehr hoher Wahrscheinlichkeit zu einem Nutzwert

$$\bigvee_{k \in \mathcal{K}} c_i^{(k)} = 0$$

korrespondiert. Will sich mindestens ein Teilnehmer T anmelden, so sind dann mindestens $w$ Sendesymbole $c_i^{(k)}$ für $w$ unterschiedliche $i = 1, \ldots, n$ identisch Eins, und das Verhältnis $e'_{n-w+1}/e'_S$ in der Regel relativ hoch. Demzufolge detektiert Test I, ob eine oder keine Anmeldung stattfindet.

Im Test II wird der $w + 1$-größte Wert auf einen Nutzanteil hin überprüft. Ist das Verhältnis $e'_{n-w}/e'_S$ relativ klein, so enthalten wahrscheinlich beide Empfangswerte nur Rauschen. In diesem Fall ist das Gewicht des zu detektierenden Codeworts genau $w$, also liegt genau eine Anmeldung vor. Ist hingegen das Verhältnis $e'_{n-w}/e'_S$ relativ groß, so sollte $e'_{w+1}$, einen Nutzsignalanteil enthalten und das Gewicht von $c^d$ ist größer als $w$. In diesem Fall finden mehr als eine Anmeldung gleichzeitig statt.

Ist nun auch Test II positiv entschieden, so soll mit Test III geprüft werden, ob eventuell zwei gleichzeitige Anmeldungen vorliegen. Dazu wird der $(w_{max2} + 1)$-größte Wert auf einen Nutzanteil hin getestet. max2 ist die maximale Anzahl von Einsen, welche in einem Zweiermuster auftreten kann. Es gilt z.B. $w_{max2} = 10$ für den $ZFD_2$ basierend auf dem Nordstrom-Robinson-Code und $w_{max2} = 13$ für den $ZFD_2$ basierend auf dem binären Golay-Code. Ist in $e'_{n-wma2+1}$ ein Nutzsignalanteil enthalten, dann melden sich definitiv mehr als zwei Teilnehmer gleichzeitig an und die Kollision ist nicht auflösbar.

Andernfalls müssen in weiteren, vom verwendeten Code abhängigen Tests die Detektionswerte $c^d_{\pi^{-1}(n-(w+1))}, \ldots, c^d_{\pi^{-1}(n-wmax2+1)}$ ermittelt werden.

Fall A: $ZFD_2$ Code basierend auf Nordstrom-Robinson-Code

Bei diesem Code sind entsprechend FIG. 2 für ein Zweiermuster die Codegewichte 8, 9 und 10 möglich. Demzufolge schließen sich an den Test III zwei weitere Schwellwerttests an, siehe nachfolgende Tabelle 2, welche die Detektionsstrategie für Anmeldeproblematik bei Verwendung des auf dem Nordstrom-Robinson-Code basierenden $ZFD_2$-Code aufzeigt, mit $f_4$, $f_5$: Schwellwerte und $\pi^{-1}$: inverse Permutation zur Ordnung der Entscheidungsvariablen.

| | $e'_7 / e'_5 > f_4$? | | |
|---|---|---|---|
| Test IV | Ja | | nein |
| | $e'_6 / e'_5 > f_5$? | | |
| Test V | Ja | nein | |
| | $c^d_{\pi^{-1}(15)} = 1$ | $c^d_{\pi^{-1}(15)} = 1$ | $c^d_{\pi^{-1}(15)} = 1$ |

(fortgesetzt)

| Detektion | | | |
|---|---|---|---|
| | . . . | . . . | . . . |
| | $c^d_{\pi^{-1}}(8) = 1$ | $c^d_{\pi^{-1}}(8) = 1$ | $c^d_{\pi^{-1}}(8) = 1$ |
| | $c^d_{\pi^{-1}}(7) = 1$ | $c^d_{\pi^{-1}}(7) = 1$ | $c^d_{\pi^{-1}}(7) = 0$ |
| | $c^d_{\pi^{-1}}(6) = 1$ | $c^d_{\pi^{-1}}(6) = 0$ | |
| | $c^d_{\pi^{-1}}(5) = 0$ | | |
| | . . . | . . . | . . . |
| | $c^d_{\pi^{-1}}(1) = 0$ | $c^d_{\pi^{-1}}(1) = 0$ | $c^d_{\pi^{-1}}(1) = 0$ |

Fall B: ZFD2 Code basierend auf binären Golay-Code

Hier sind gemäß FIG. 3 für ein Zweiermuster die Codegewichte 11 und 13 möglich. Demzufolge ist nach Test III nur eine weitere Schwellwertentscheidung notwendig; siehe nachfolgende Tabelle 3, welche die Detektionsstrategie $e$ für Anmeldepröblematik bei Verwendung des auf dem binären Golay-Code basierenden $ZFD_2$ Code beschrieben, mit $f_4$: Schwellwert und $\pi^{-1}$: inverse Permutation zur Ordnung der Entscheidungsvariablen.

| Test IV | $e'_{11} / e'_{10} > f_4$? | |
|---|---|---|
| | Ja | nein |
| Detektion | $c^d_{\pi^{-1}}(23) = 1$ | $c^d_{\pi^{-1}}(23) = 1$ |
| | . . . | . . . |
| | $c^d_{\pi^{-1}}(13) = 1$ | $c^d_{\pi^{-1}}(13) = 1$ |
| | $c^d_{\pi^{-1}}(12) = 1$ | $c^d_{\pi^{-1}}(12) = 0$ |
| | $c^d_{\pi^{-1}}(11) = 1$ | . |
| | $c^d_{\pi^{-1}}(10) = 0$ | . |

(fortgesetzt)

| | . . . | . . . |
|---|---|---|
| | $c^d{}_{\pi^{-1}}(1) = 0$ | $c^d{}_{\pi^{-1}}(1) = 0$ |

Die oben beschriebene Detektionsstrategie erweist sich in Simulation als sehr effektiv und führt im Rahmen endlicher Simulationsdauer zu keinen Fehldetektionen, genau dann, wenn in $e_s{}'$ kein Nutzanteil enthalten ist. Melden sich jedoch entsprechend viele Teilnehmer gleichzeitig an, so kann der Fall eintreten, dass in allen Entscheidungsvariablen Nutzanteile auftreten und somit die Wahrscheinlichkeit für eine Fehldetektion relativ hoch ist. Aus diesem Grund hat es sich als zweckmäßig erwiesen, die Detektionsstrategie aus Tabelle 1 leicht zu modifizieren bzw. zu erweitern.

1. Nachdem Test I positiv und Test II negativ, also für genau eine Anmeldung entschieden wurde, folgt, dass in $e'_{n-w+1}$ ein Nutzsignalanteil und in $e'_{n-w}$ kein Nutzsignalanteil angenommen wird. Somit kann zur Verifikation der Hypothese "genau eine Anmeldung" ein modifizierter Test 1

$$e'_{n-w+1} \ / \ e'_{n-w} > f_{1,mod}$$

durchgeführt werden, welcher nicht darauf beruht, dass $e'_S$ keinen Nutzanteil enthält.

2. Analog dazu wird erfindungsgemäß, nach positiven Tests I und II sowie negativem Test III, also bei Entscheidung für "vielleicht zwei Anmeldungen", ein weiterer Kontrolltest II

$$e'_{n-w} \ / \ e'_{n-wmax2} > f_{2,mod}$$

ausgeführt, welcher ebenfalls unabhängig von der Annahme über $e'_S$ ist. Die Schwellwerte $f_1$, $f_2$, $f_3$ sind einerseits so zu optimieren, dass die Wahrscheinlichkeit für die Detektion für einen Nutzsignalanteil (obwohl im betrachteten Entscheidungswert kein Nutzsignalanteil vorliegt), kleiner als eine maximal zulässige Schranke $Pr_{FA,max}$ ist. Diese Wahrscheinlichkeit wird in der zur Literatur probability of false alarm $Pr_{FA}$. Je größer die Schwellwerte gewählt werden, um so kleiner ist die jeweilige $Pr_{FA}$. Andererseits sinkt mit steigenden Schwellwerten die Wahrscheinlichkeit für eine Detektion einer gesendeten Eins, die sogenannten detection probability $Pr_D$. Demzufolge dürfen die Schwellwerte weder zu groß noch zu klein gewählt werden, um die Anforderungen an $Pr_{FA,max}$ und $Pr_{D,min}$ zu erfüllen. Entsprechende Aussagen gelten ebenso für weitere Schwellwerttests mit $f_4$ und $f_5$ (siehe Tabellen 2 und 3). Weiterhin ist die Optimierung und Wahl der Schwellwerte abhängig vom verwendeten Superimposed Code, wobei um die Schwellwerte optimieren zu können, müssen die Wahrscheinlichkeiten $Pr_{FA}$ und $Pr_D$ für verschiedene Szenerien ausgewertet werden.

Bei den obigen Erläuterungen wird davon ausgegangen, dass die Entscheidungsvariable $e'_S$ nur Rauschen enthält. Um dies zu gewährleisten, müssen bei der Überlagerung (ODER-Verknüpfung) der Codewörter des zugrundeliegenden Superimposed Codes zumindestens s Stellen identisch Null bleiben. Beim auf dem Nordstrom-Robinson-Code basierenden $ZFD_2$ Code mit n = 15 und w = 5 sind mindestens zwei gleiche Positionen aller Codewörter identisch Null, wenn sich nicht mehr als drei Teilnehmer gleichzeitig anmelden. Bei mehr als drei simultanen Anmeldungen können auch in allen 15 Entscheidungsvariablen Nutzsignalanteile enthalten sein. Da die Wahrscheinlichkeit für weniger oder gleich drei gleichzeitige Anmeldungen als sehr viel größer als die Wahrscheinlichkeit für mehr als drei Anmeldungen zu betrachten ist, kann auch $e'_2$ als Referenzentscheidungsvariable verwendet. Die weniger wahrscheinlichen Fälle, wenn mehr als 13 Entscheidungsvariable Nutzsignalanteile enthalten, können in einem gesonderten Schritt erfasst werden. Vorzugsweise werden für die Schwellwertoptimierung als Systemparameter eine OFDM-Trägerzahl von D = 256 und ein Guard-Intervall der Länge Dg = 9 gewählt; dies entspricht einer maximalen Länge der zeitdiskreten Kanalimpulsantwort von 10 Taps, sowie wird ein mittleres SNR am Empfängereingang von

$$E_S / N_O = \mathrm{SNR}_Y = 10 \text{ dB}$$

angenommen. Letzteres ist für eine zuverlässige digitale Übertragung über Power-Line von Vorteil: Es sei angemerkt, dass für größere Störabstände die Anmeldeprozedur zuverlässiger arbeitet und somit obiges SNR eine eher ungünstige Annahme darstellt.

Als erstes wird im Test I getestet, ob überhaupt eine Anmeldung vorliegt. Da dann mindestens ein Codewort mit Gewicht $w' = 5$ gesendet worden ist, wird $e'_{n-w+1} = e'_{11}$ gegen $e'_S = e'_2$ verglichen.

Für die Ermittlung der false-alarm-Wahrscheinlichkeit $P_{FA}$ sowie der detection-Wahrscheinlichkeit $P_D$ werden vier Fälle unterschieden:

a) keine Anmeldung,
b) genau eine Anmeldung, d.h., gesendetes Codewort mit Gewicht $w' = 5$,
c) zwei oder mehr Anmeldungen, wobei das überlagerte Codewort mit für genau zwei Anmeldungen maximalem Gewicht $w' = 2w = 10$ angenommen wird,
d) drei oder mehr Anmeldungen, wobei das überlagerte Codewort mit für genau drei Anmeldungen maximalem Gewicht $w' = 13$ (siehe FIG. 2) angenommen wird.

Im Fall a) sind alle $e'_i$ zentral $X^2$-verteilt,
im Fall b) sind 5 Entscheidungsvariablen nichtzentral und 10 zentral $X^2$-verteilt,
im Fall c) sind 10 Entscheidungsvariablen nichtzentral und 5 zentral $X^2$-verteilt
im Fall d) sind 13 Entscheidungsvariablen nichtzentral und 2 zentral $X^2$-verteilt.

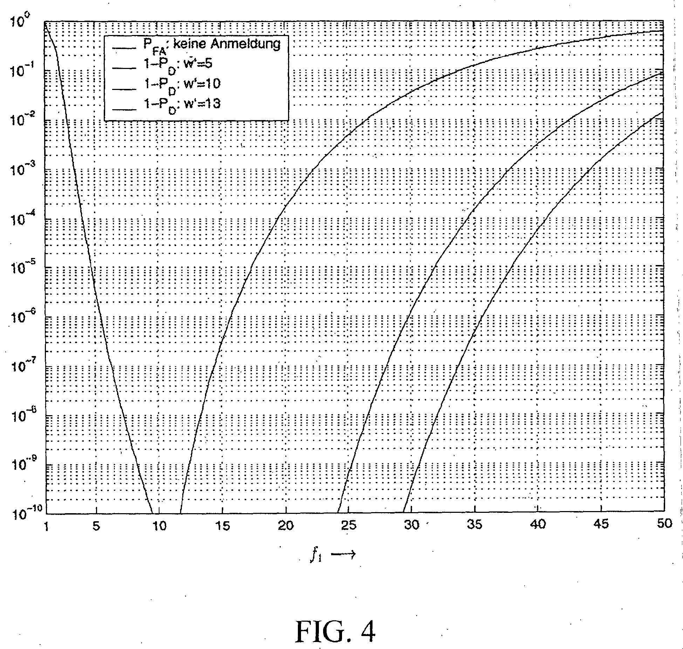

Wie oben schon beschrieben, werden für die nichtzentral $X^2$-verteilten Zufallsvariablen identische Parameter $s^2$ vorausgesetzt. In FIG. 4 sind die numerisch ermittelten Wahrscheinlichkeiten $P_{FA}$ sowie $1 - P_D$ über dem Schwellwert $f_1$ für die Fälle b) $w' = 5$, c) $w' = 10$ und d) $w' = 13$ aufgetragen. Je größer der Schwellwert gewählt wird, desto kleiner ist die Wahrscheinlichkeit, dass bei keiner Anmeldung das Verhältnis $e'_{11}/e'_2$ den Schwellwert übersteigt. Deshalb fällt $P_{FA}$ mit wachsendem $f_1$. Jedoch sinkt auch die Wahrscheinlichkeit der Detektion einer durchgeführten Anmeldung mit zunehmenden $f_1$.

Am ungünstigsten für die Detektion einer Anmeldung ist der Fall c) mit dem maximalen Gewicht $w' = 13$, da dann nur zwei Entscheidungsvariablen ohne Nutzsignalanteil vorliegen.

Ist dann die Rauschstörung in nur einer Entscheidungsvariablen momentan relativ groß, so wird für den Fall keine Anmeldung entschieden.

Wie aus der FIG. 4 zu erkennen ist, wird bei einem Schwellwert von $f_1 \approx 11$ sowohl eine false-alarm-Wahrscheinlichkeit von $P_{FA} < 10^{-10}$ als auch eine detection-Wahrscheinlichkeit von $P_D > 1 - 10^{-10}$ erreicht.

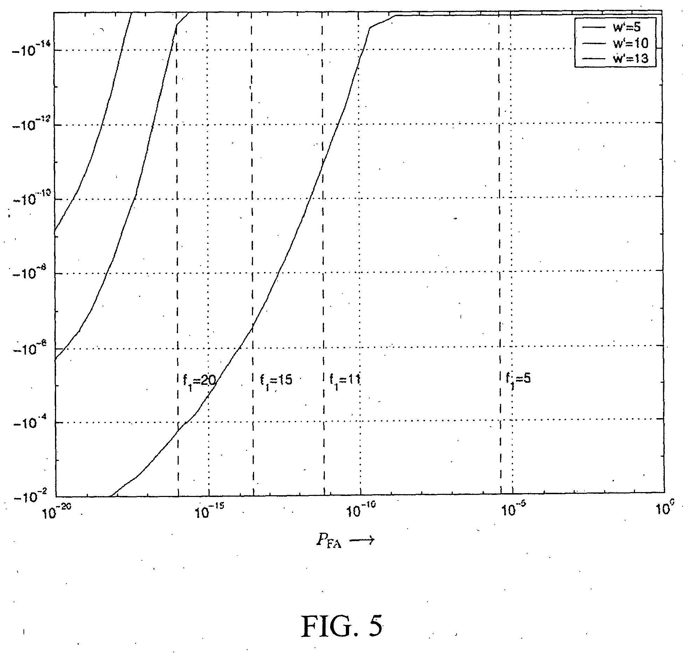

Der Zusammenhang zwischen $P_D$ und $P_{FA}$ ist in FIG. 5 dargestellt. Zur besseren numerischen Auflösung ist dabei $P_D$ um 1 reduziert. Der Schwellwert $f_1$, welcher die Kurven parametrisiert, ist für verschiedene Werte ebenfalls angegeben. Wie schon anhand von FIG. 4 aufgezeigt wurde, sinkt mit steigendem $f_1$ zwar die false-alarm-Wahrscheinlichkeit $P_{FA}$, jedoch fällt auch die detection-Wahrscheinlichkeit $P_D$ ab. Mit $f_1 \approx 11$ ist ein guter Kompromiss zwischen $P_D$ sehr nahe bei 1 und $P_{FA}$ sehr nahe bei 0 erreicht.

Wenn Test I positiv ausgefallen ist, d.h., $w' \geq 5$ wird vorausgesetzt, so folgt Test II. Hier werden folgende Fälle betrachtet:

a) genau eine Anmeldung, d.h., gesendetes Codewort mit Gewicht $w' = 5$,
b) zwei oder mehr Anmeldungen, wobei das überlagerte Codewort mit für genau zwei Anmeldungen maximalem Gewicht $w' = 2w = 10$ angenommen wird,
c) drei oder mehr Anmeldungen, wobei das überlagerte Codewort mit für genau drei Anmeldungen maximalem Gewicht $w' = 13$ (siehe FIG. 2) angenommen wird.

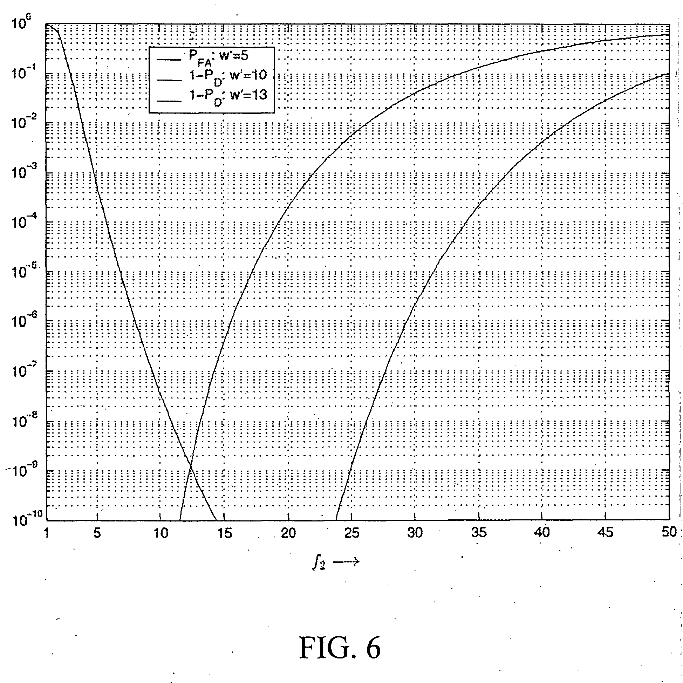

Der Fall a) korrespondiert zur false-alarm-Wahrscheinlichkeit, für die Fälle b), c) werden die detection-Wahrscheinlichkeiten ausgewertet. FIG. 6 gibt den Verlauf der false-alarm-Wahrscheinlichkeit $P_{FA}$ und komplementäre detection-Wahrscheinlichkeit $1 - P_D$ in Abhängigkeit vom Schwellwert $f2$ bzw. $1 - P_D$ für die Fälle b) $w' = 10$, c) $w' = 13$ an. Wiederum nimmt die false-alarm-Wahrscheinlichkeit mit wachsendem Schwellwert ab, jedoch steigt auch die Wahrscheinlichkeit eine durchzuführende Detektion zu versäumen. Wird ein Wert von $PFA \approx 10^{-10}$ gefordert, so ist ein Schwellwert von $f_2 \approx 14$ notwendig.

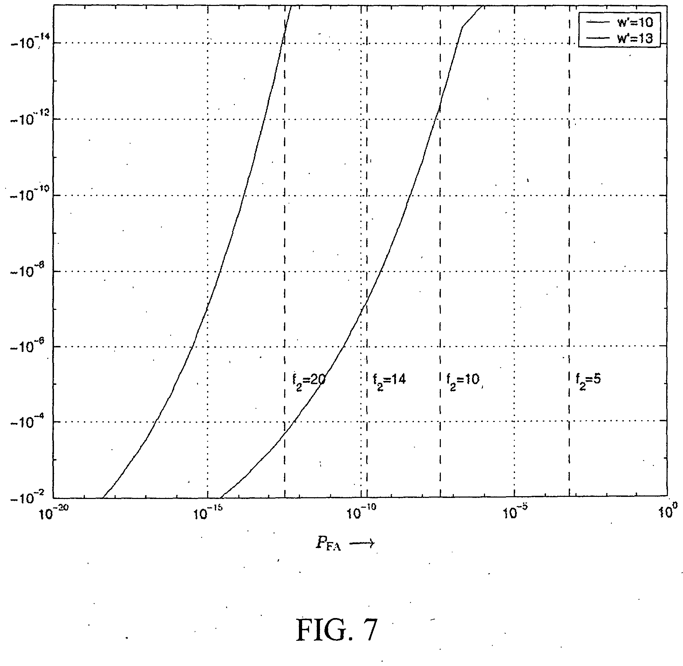

Den Verlauf von $P_D$ über $P_{FA}$ zeigt FIG. 7 für die Fälle b) $w' = 10$ und c) $w' = 13$, wobei zur besseren Auflösung $P_D - 1$ dargestellt ist. Die Parametrisierung mit $f_2$ ist punktuell angegeben. Bei $f_2 = 14$ ist die Wahrscheinlichkeit eine Detektion zu verpassen für $w' = 10$ praktisch 0 und für $w' = 13$ ungefähr $10^{-7}$.

Da bei positivem Ergebnis von Test II weitere Tests durchzuführen sind und somit bei false-alarm Folgefehler auftreten, soll $P_{FA} \approx 10^{-10}$ erfüllt werden. Somit wird vorzugsweise ein Wert von $f_2 = 14$ gewählt.

Liefern sowohl Test I, als auch Test II positive-Resultate, dann ist im Test III das Verhältnis $e'_5 / e'_2$ auszuwerten.

In diesem Fall sind zu unterscheiden:

a) zwei oder mehr Anmeldungen, wobei das überlagerte Codewort mit für genau zwei Anmeldungen maximalem Gewicht $w' = 2w = 10$ angenommen wird,

b) drei oder mehr Anmeldungen, wobei das überlagerte Codewort mit für genau drei Anmeldungen maximalem Gewicht $w' = 13$ (siehe FIG. 2) angenommen wird.

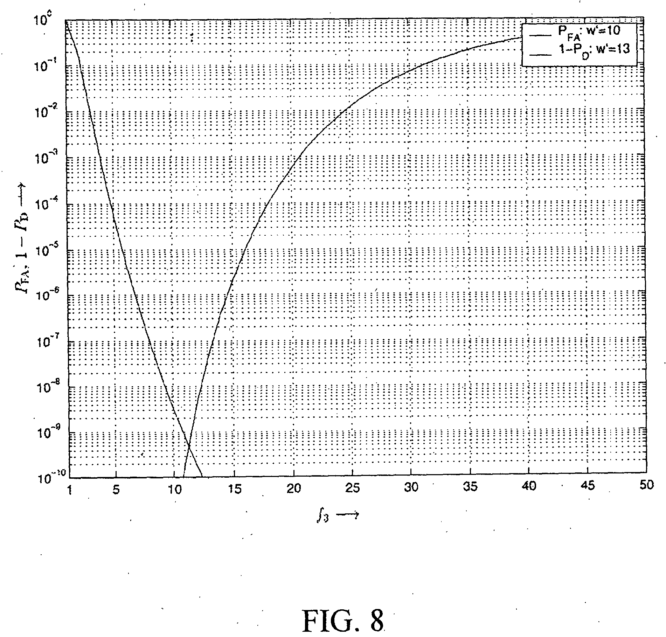

Die Möglichkeit für $e'_5 / e'_2 > f3$, wenn a), drückt sich in der false-alarm-Wahrscheinlichkeit und die fehlerhafte Detektion $e'_5 / e'_2$ P $f_3$, wenn b), spiegelt sich in der detection-Wahrscheinlichkeit wider. Die Kurven für die false-alarm-Wahrscheinlichkeit $P_{FA}$ und die komplementäre detection-Wahrscheinlichkeit $1 - P_D$ über dem Schwellwert $f_3$ sind in FIG. 8 dargestellt.

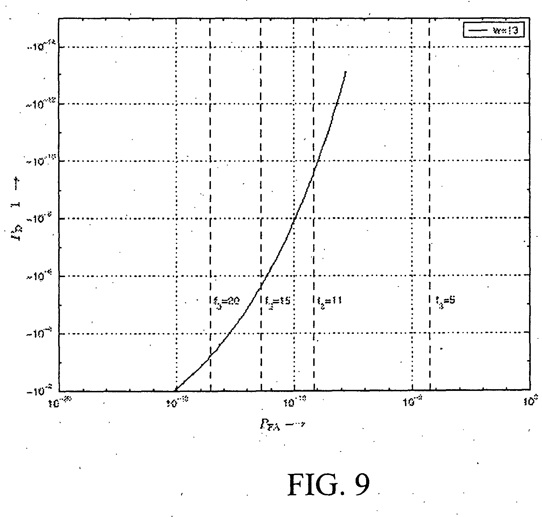

FIG. 9 zeigt $P_D$ bzw. zur besseren Auflösung $P_D - 1$ über $P_{FA}$ mit $f_3$ als Parameter. Da nach negativem Test III weitere Tests folgen, soll hier $1 - PD \approx 10^{-10}$ gefordert werden. Dies wird bei $f3 = 11$ ungefähr erfüllt. Die zugehörige false-alarm-Wahrscheinlichkeit ist mit $P_{FA} \approx 10^{-9}$ akzeptabel.

Wenn anhand der Tests I-III geschätzt wurde, dass ein überlagertes Codewort mit Gewicht 8, 9 oder 10 gesendet wurde, so muss mittels der Tests IV und V dieses Gewicht ermittelt werden (siehe Tabelle 2). Im Test IV wird entschieden, ob das Gewicht identisch oder größer als 8 ist. Dazu sind die Fälle

a) überlagertes Codewort mit Gewicht $w' = 8$, d.h., genau zwei Anmeldungen,

b) überlagertes Codewort mit Gewicht $w' = 9$, d.h., zwei oder mehr Anmeldungen,

c) überlagertes Codewort mit Gewicht $w' = 10$, d.h., zwei oder mehr Anmeldungen zu untersuchten. Der Fall a) korrespondiert zur false-alarm-Wahrscheinlichkeit, für die Fälle b), c) werden die detection-Wahrscheinlichkeiten ausgewertet.

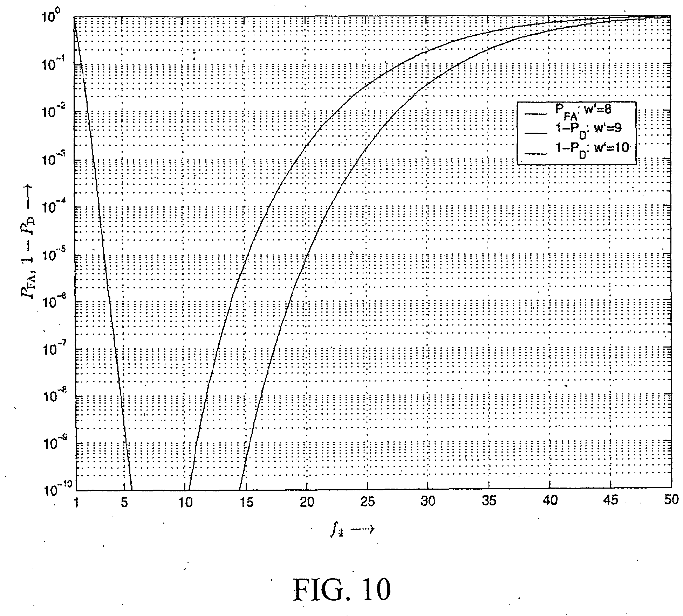

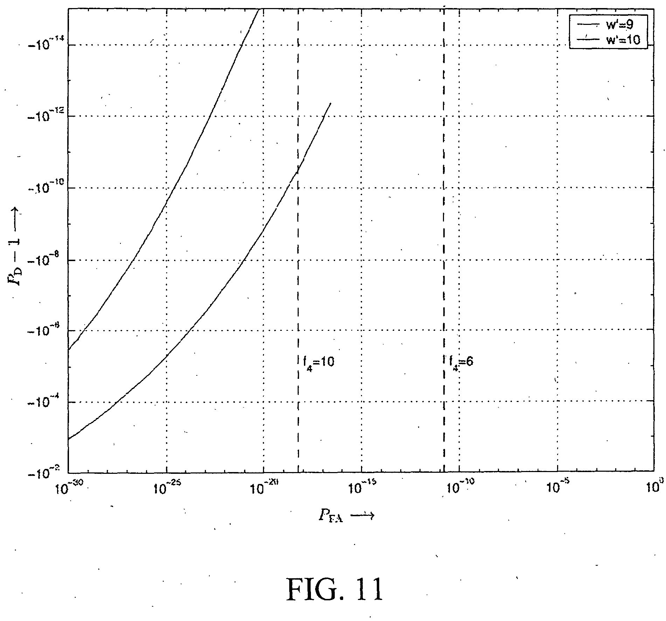

Die FIG. 10 und FIG. 11 fassen die numerisch erhaltenen Ergebnisse für $P_{FA}$ und $P_D$ mit dem Schwellwert $f_4$ als Parameter zusammen. Wie aus FIG. 10 und FIG. 11 zu entnehmen ist, werden bei Werten von $f_4 \approx 6, ... , 10$ Wahrscheinlichkeiten von $P_{FA} < 10^{-10}$ bzw. $1 - P_D < 10^{-10}$ erreicht. Mit der Wahl $f_4 = 6$ können dementsprechend gute Detektionsergebnisse erzielt werden.

Schließlich ist bei erfolgreichem Test IV im Test V zu unterscheiden, ob ein überlagertes Codewort mit Gewicht $w' = 9$ oder $w' = 10$ vorliegt. Die auszuwertenden Wahrscheinlichkeiten ergeben sich aus den Fällen:

b) bei überlagertem Codewort mit Gewicht $w' = 9$ wird auf $w' = 10$ entschieden => PFA,

c) bei überlagertem Codewort mit Gewicht $w' = 10$ wird auf $w' = 10$ entschieden => PD.

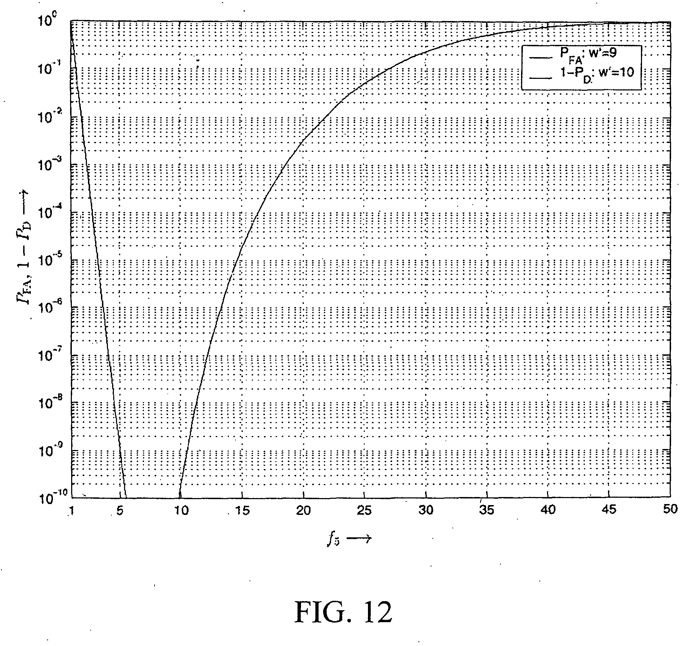

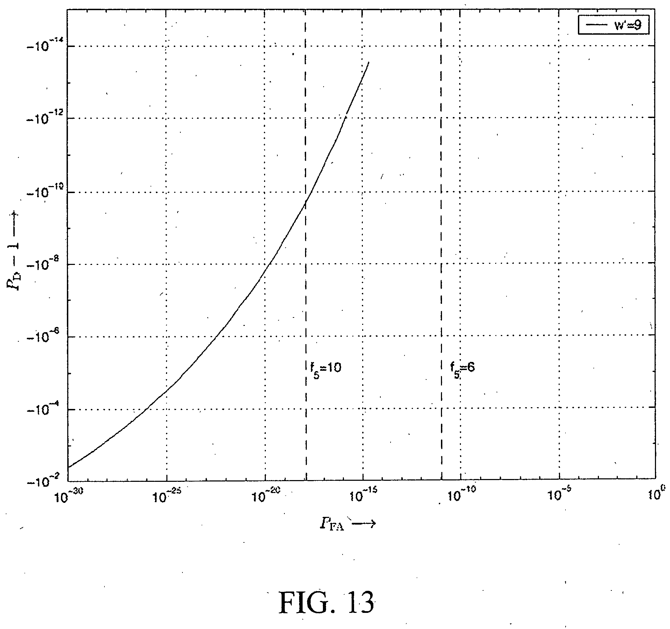

Die entsprechenden Kurven sind in FIG. 12 und FIG. 13 wiedergegeben. Ein Schwellwert von $f_6 = 6$ erweist sich als geeignet. Sowohl $P_{FA}$ als auch $1 - P_D$ sind für dieses $f_6$ kleiner als $-10^{-10}$.

Erfindungsgemäß kann der Fall berücksichtigt werden, dass in $e'_2$ Nutzsignalanteile enthalten sind, und es können modifizierte Tests I und II durchgeführt werden.

Die zugehörigen modifizierten Schwellwerte $f_{1,mod}$ bzw. $f_{2,mod}$ sind dabei so zu dimensionieren, dass bei richtiger Hypothese "$e'_2$ ist ohne Nutzsignalanteil" die Detektiori quasi fehlerfrei ist.

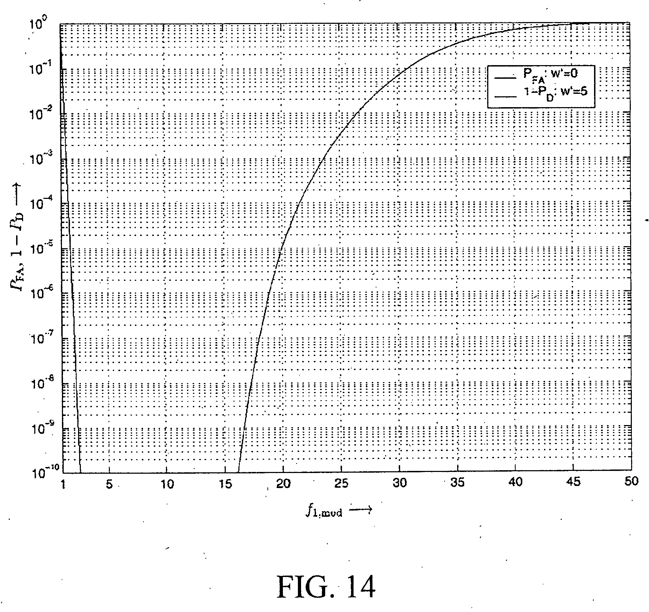

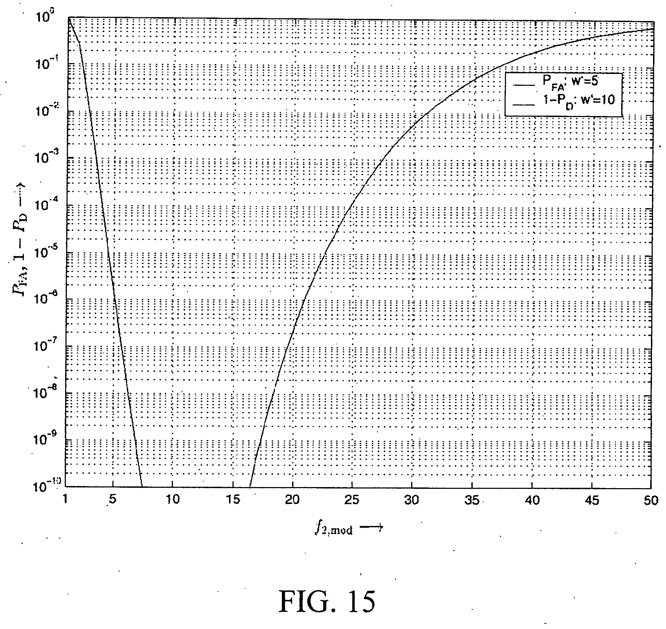

Die Kurven der false-alarm-Wahrscheinlichkeit sowie detection-Wahrscheinlichkeit sind in FIG. 14 für Test I sowie in FIG. 15 für Test II über den Schwellwerten $f_{1,mod}$ bzw. $f_{2,mod}$ aufgetragen. Offensichtlich sind $f_{1,mod} = 10$ und $f_{2,mod} = 12$ angemessene Schwellwertgrößen.

Zur Verifikation der analytisch abgeleiteten und numerisch ausgewerteten Ergebnisse für die Wahrscheinlichkeiten $P_D$ und $P_{FA}$ können für verschiedene Szenarien Simulationen der Detektion durchgeführt werden. Beispielsweise sind die Ergebnisse der Simulationen für

a) $P_D$ bei Test II mit $w' = 13'$

b) $P_{FA}$ bei Test III und

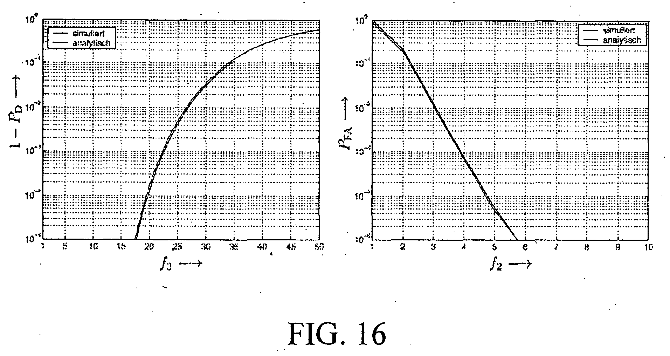

in der FIG. 16 gezeigt. Die zugehörigen gerechneten Wahrscheinlichkeitsverläufe sind ebenfalls eingezeichnet. Die auf verschiedenen Wegen erhaltenen Ergebnisse stimmen sehr gut überein und bestätigen somit die Aussagen der vorangegangenen Schwellwertoptimierung.

Nach der Schwellentscheidung liegt ein binäres Empfangswort $\mathbf{c}^d$ vor, welches bei korrekter Schwellwentscheidung aus der ODER-Verknüpfung der gesendeten Codewörter gebildet wird. Durch die Detektionsstrategie ist schon festgelegt, dass nur Wörter $\mathbf{c}^d$ auftreten können, welche aus potentiell auflösbare Kollisionen hervorgehen. Weiterhin ist schon unterschieden, ob

a) keine Anmeldung,
b) genau eine Anmeldung,
c) genau zwei Anmeldungen,
d) zwei oder mehr Anmeldungen

vorliegen. Mit diesem Vorwissen vereinfacht sich die Decodierung entsprechend.

Für die Decodierung der anmeldenden Teilnehmer werden nun Tabellen mit den Teilnehmernummern und den zugehörigen Codewörtern bzw. überlagerten Codewörtern benötigt. Insbesondere ist eine Tabelle, welche die einzelnen Teilnehmer und ihre Codewörter enthält, und beim $ZFD_2$ Code basierend auf dem Nordstrom-Robinson-Code zwei weitere Tabellen mit den Zweiermustern mit Gewicht 9 und 10 und den korrespondierenden Tellnehmerpaaren sowie beim $ZFD_2$ Code basierend auf dem binären Golay-Code eine weitere Tabelle mit den Zweiermustern mit Gewicht 13 und den korrespondierenden Tellnehmerpaaren zu erstellen. Die Angabe der Zeilen einer Tabelle benennt dabei die Anzahl der zu speichernden Paare Teilnehmernummer(n) $\leftrightarrow$ Code/Sendewort. Die direkte Abspeicherung dieser relativ großen Tabellen ist sicherlich nur bedingt sinnvoll., Insbesondere beim Auslesen der Tabellen sind sehr viele Vergleiche zwischen dem Empfangswort $c^d$ und Tabelleneinträgen notwendig.

Für eine effiziente Speicherung sowie effizientes Auslesen bietet sich die Verwendung von verschiedenen Suchalgorithmen an, welche z.B. auf der Sortierung von Daten (hier können die Codewörter z.B. entsprechend ihres Zahlenwertes sortiert werden) beruhen, sequentiell die binäre oder dezimale Repräsentation der Codewörter durchsuchen, oder mit sogenannten hash Funktionen arbeiten.

Die Decodierung für die Fälle a) bis d) erfolgt mit den Tabellen gemäß folgender Strategie:

a) keine Anmeldung: keine Decodierung notwendig,
b) genau eine Anmeldung: finden des zu $c^d$ korrespondierenden Teilnehmers in Tabelle I,
c) genau zwei Anmeldungen: finden der zwei Codewörter in Tabelle I, deren Einspositionen auch in $c^d$ enthalten sind,
d) zwei oder mehr Anmeldungen: finden der zu $c^d$ korrespondierenden Teilnehmer in Tabelle II bzw. Tabelle III.

Um die in den vorangegangenen Abschnitten entworfene und optimierte Anmeldestrategie zu verifizieren, wurde das Anmeldeszenario simuliert. Dabei wird wie in der Optimierung der auf dem Nordstrom-Robinson-Code basierende $ZFD_2$ Code betrachtet. Somit sind maximal 42 Teilnehmer im Gesamtsystem zulässig.

Die Kanalimpulsantworten wurden entsprechend typischen Leistungsverzögerungsprofilen mit komplex gaußvertellten Impulsantwortkoeffizienten erzeugt, wobei die augenblickliche Energie jeder Impulsantwort so normiert wurde, dass ein vorgegebener minimaler Empfangsstörabstand $(E_S/N_0)_{min}$ eingehalten wird. Die Leistungsübertragung verschiedener Kanäle kann um einen maximalen Faktor differieren. Dieser Faktor ist in allen Simulationen zu 10 dB gewählt, d.h., das maximale Verhältnis der Empfangsleistungen der Anmeldesignale unterschiedlicher Teilnehmer ist 10.

In der ersten Simulation wurde per Zufallsentscheidung bestimmt, wie viele und welche Teilnehmer sich in einem Zeitschlitz anmelden. Dabei wird die Wahrscheinlichkeit, dass sich $l$ Teilnehmer anmelden, als mit $l$ exponentiell abfallend angenommen, d.h.,

Pr{ $l$ Anmeldungen} exp($-l$).

In FIG. 17 ist die gemessene relative Häufigkeit der Anzahl von Anmeldungen bei Simulation der Teilnehmeranmeldung nach $10^7$ simulierten Anmeldezeiträumen wiedergegeben. Der minimale Empfangsstörabstand wurde auf $10\log_{10}(((E_S/N_0)_{min}) = 10$ dB eingestellt, also der für die Optimierung angenommene Störabstand.

Die Auswertung der Simulation nach $10^7$ Anmeldezeiträumen lässt sich folgendermaßen zusammenfassen:

1. Wenn keine Anmeldung auftrat, wurde immer für "keine Anmeldung" entschieden ($\approx 6 \cdot 10^6$ -mal).
2. Wenn genau eine Anmeldung auftrat, wurde immer der sich anmeldende Teilnehmer richtig detektiert ($\approx 2,4 \cdot 10^6$ -mal).
3. Wenn genau zwei gleichzeitige Anmeldungen vorlagen, wurde in allen Fällen für die richtigen zwei Teilnehmer entschieden ($\approx 9 \cdot 10^5$ -mal).
4. Wenn mehr als zwei Anmeldungen auftraten, wurden in sehr wenigen (23) Fällen ein bzw. zwei richtige Teilnehmer detektiert, ansonsten für nicht auflösbare Kollision

entschieden.

Somit kann festgehalten werden, dass während der Simulationszeit keine Fehlentscheidung des Detektionsalgorithmus auftrat.

In weiteren Simulationen wurde die gleichzeitige Anmeldung von 0 bis 10 Teilnehmern als gleichwahrscheinlich angenommen. Dies hat zwar relativ wenig praktische Relevanz, führt aber zu einer höheren Häufigkeit von überlagerten Empfangswörtern mit Gewicht > 13. Diese Fälle wiederum sind für den Detektionsalgorithmus als kritisch zu betrachten, da die verwendete Annahme "$e_2$' enthält kein Nutzsignal", nicht zutrifft. Weiterhin wurde der Wert für $(E_S/N_0)_{min}$ variiert und zu 5 dB, 7 dB, 10 dB und 13 dB gewählt.

Es wurden folgende Ergebnisse nach $10^7$ Durchläufen gemessen:

1. $10\log_{10}((E_S/N_0)_{min}) = 10$ dB bzw. $10\log_{10}((E_S/N_0)_{min}) = 13$ dB:

Während der Simulationszeit trat in beiden Fällen genau eine Fehlentscheidung auf. Bei einer Anmeldung von zwei Teilnehmern wurde einer oder beide falsch detektiert. Alle anderen Anmeldesituationen wurden richtig erkannt.

2. $10\log_{10}((E_S/N_0)_{min}) = 7$ dB:

Auch hier wurde in einem Fall die gleichzeitige Anmeldung von zwei Teilnehmern nicht korrekt aufgelöst. Weiterhin wurde in 0,006 % der Fälle einer bzw. zweier Anmeldungen für "keine Anmeldung" detektiert. Die Ursache hierfür ist in den Schwellwerten für die modifizierten Tests I und II zu suchen, welche für 7 dB minimalen Empfangsstörabstand kleiner zu wählen sind.

3. $10\log_{10}((E_S/N_0)_{min}) = 5$ dB:

Bei diesem minimalen Störabstand tritt die Fehlanpassung der Schwellwerte für die modifizierten Tests I und II deutlicher hervor. Mit einer Häufigkeit von 0,69 % wurde bei einer bzw. zwei Anmeldungen für "keine Anmeldung" entschieden. Alle anderen Anmeldesituationen wurden korrekt aufgelöst.

Die Ergebnisse für variierenden minimalen Empfangsstörabstand zeigen, dass sich der Detektionsalgorithmus sehr robust gegen bessere als im Design angenommene Übertragungsverhältnisse verhält. Für niedrigeren Störabstand tritt erwartungsgemäß gehäuft eine Nichtdetektion von Anmeldungen auf. Insgesamt konnte mit den Simulationen, für die erfindungsgemäße Kombination aus Verfahren der Multiuser-Übertragung mit Superimposed Codes sowie Verwendung von bestimmten Spreizsequenzen und einer zyklischen Fortsetzung deren einfache Anpassbarkeit bei der Optimierung der Schwellwertstrategien und der zugehörigen Schwellwertparameter eindrucksvoll bestätigt werden.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. So kann beispielsweise die Optimierung der Schwellwerte nicht durch den Systemdesigner, sondern durch die Zentrale (Master) erfolgen u.a.

**Patentansprüche**

**1.** Verfahren zum Vielfachzugriff in einem Kommunikationssystem

- mit einer einzigen Zentrale (Z) und einer Vielzahl von Teilnehmereinrichtungen (T) im Kommunikationsnetzwerk und
- mit einer Datenübertragung unter Verwendung eines gemischten Frequenz- und Zeitmultiplexverfahrens, derart, dass der von der Teilnehmereinrichtung (T) gesendete Zeitrahmen einen Zeitschlitz enthält, in welchem die Teilnehmer (T) der Zentrale (Z) einen Sendewunsch mittels teilnehmerspezifische Muster signalisieren können,

**dadurch gekennzeichnet, dass** in den Teilnehmereinrichtungen (T) teilnehmerspezifische Muster ($v^{(k)}$) erzeugt werden, wobei binäre Codewörter ($c^{(k)}$) für die teilnehmerspezifischen Muster ($v^{(k)}$) verwendet werden, welche einen Superimposed Code bilden, wobei jedem Teilnehmer ein binäres Codewort ($c^{(k)}$) der binären Codewörter ($c^{(k)}$) fest zugewiesen wird, und dass in der Zentrale (Z) für die überlagerten teilnehmerspezifischen Muster sukzessiv Schwellwerttests mit gleitenden Schwellwerten $f_1, f_2, f_3, \ldots$ basierend auf Entscheidungswerten (e) und/oder auf Verhältnissen von Entscheidungswerten $e_i / e_j$ und auf einem verwendeten Superimposed Code durchgeführt werden, bis entweder die Anzahl von einem Sendewunsch signalisierenden Teilnehmern oder eine nicht auflösbare Kollision detektiert wird, derart, dass bis zu m gleichzeitig übertragende Teilnehmer aufgelöst werden oder die gleichzeitige Anmeldung nicht auflösbare Kollision von mehr als m Teilnehmern detektiert wird, und dass nach Maßgabe der detektierten Anzahl die Decodierung erfolgt.

2. Verfahren nach Anspruch 1, **dadurch gekennzeichnet, dass** ein in der Teilnehmereinrichtung (T) angeordneter Encoder (TE) den Sendewunsch $u^{(k)} = 1$ durch ein binäres Codewort ($\mathbf{c}^{(k)}$), welches dem Teilnehmer (T) fest zugewiesen ist, signalisiert und dass ein mit dem Encoder (TE) verbundener Mapper (TM) und eine diesem nachgeordnete Einrichtung (TZE) - entsprechend der Position eines bestimmten binären Zustands im Codewort ($\mathbf{c}^{(k)}$) - als Sendesignal ($\mathbf{s}^{(k)}$) das teilnehmerspezifische Muster ($\mathbf{v}^{(k)}$) von zyklisch fortgesetzten Spreizsequenzen $\xi^{\mathbf{i}}$ erzeugen.

3. Verfahren nach Anspruch 1, **dadurch gekennzeichnet, dass** in der Zentrale (Z) die Detektion eines Sendewunsches $u^{(k)} = 1$ durch:

   • Detektion des gesendeten teilnehmerspezifischen Musters, welches aus der Überlagerung gemäß einer logischen ODER-Verknüpfung einzelner binärer Codewörter bestehen kann, anhand bestimmter Empfangswerte des überlagerten Empfangssignals (r) nach einer Matched-Filterung für die Signatursequenzen, indem die Energie von Teilvektoren im Vektor ($e$) der Entscheidungsvariablen ($e_i$) gebildet wird und die resultierenden Entscheidungsvariablen ($e_i$) als Energiewerte mit gleitenden Schwellwerten $f_1$, $f_2$, $f_3$ verglichen werden,
   • Bestimmen der im empfangenen Muster enthaltenen Codewörter bzw. Feststellen einer nicht auflösbaren Kollision und
   • Ermitteln der zu den detektierten Codewörtern gehörenden Teilnehmer erfolgt.

4. Verfahren nach Anspruch 2, **dadurch gekennzeichnet, dass** der Encoder (TE) bei einem Sendewunsch $u^{(k)} = 1$ ein binäres Codewort

$$\mathbf{c}^{(k)} = \left[ \mathbf{c}^{(k)}_1, \mathbf{c}^{(k)}_2, \ldots, \mathbf{c}^{(k)}_n \right]^{T}$$

der Länge n, welches dem Teilnehmer ($T^k$) fest zugewiesen ist, und bei fehlendem Sendewunsch $u^{(k)} = 0$ das Nullwort liefert, dass der Mapper (TM) bei einem Sendewunsch $u^{(k)} = 1$ aus insgesamt n Spreizsequenzen

$$\xi^{\mathbf{i}} = \left[ \xi^{i}_1, \xi^{i}_2, \ldots, \xi^{i}_D \right]^{T}, \ 1 \le i \le n,$$

der Länge D diejenigen auswählt, für die im binären Codewort $c_i^{(k)} = 1$ gilt, und als Ausgangssignal den D-dimensionalen Vektor

$$\mathbf{v}^{(k)} = \sum_{i=1}^{n} c_i^{(k)} \xi^{\mathbf{i}}$$

erzeugt, wobei die Spreizsequenzen $\xi_l^i$ aus dem Bereich der komplexen Zahlen stammen, dass bei fehlendem Sendewunsch $u^{(k)} = 0$ der Mapper (TM) den Nullvektor erzeugt und dass in der Einrichtung (TZE) zur Bildung des zeit- und wertdiskreten Sendesignals ($\mathbf{s}^{(k)}$) der Vektor ($\mathbf{v}^{(k)}$) durch einen Präfix der Länge L-1 zyklisch ergänzt wird.

5. Verfahren nach Anspruch 3, **dadurch gekennzeichnet, dass** in der Zentrale (Z) als erstes in einer Einrichtung (ZM) eine Maskierung des überlagerten Empfangssignals (**r**) nach Maßgabe von entnommenen mittleren (D) Empfangswerten erfolgt und ein Vektor $\mathbf{y} = [y_1, y_2, \ldots, y_D]^T$ gebildet wird, dass der Vektor (y) in einem nachgeordneten Filter (ZF) mit einer Matrix $\Xi^H$ verknüpft wird, wobei aus der Filterung ein nL-dimensionaler Vektor $\mathbf{d} = [\mathbf{d}_1^T, \mathbf{d}_2^T, \ldots, \mathbf{d}_n^T]^T$ resultiert, dass in einer dem Filter (ZF) nachgeordneten Einrichtung (ZE) nach Maßgabe der Energien der Teilvektoren $\mathbf{d}_i$, $1 \le i \le n$ ein n-dimensionaler Vektor $\mathbf{e} = [e_1, e_2, \ldots, e_n]$ mit Entscheidungsvariablen ($e_i$) als Koeffizienten gebildet wird, dass mittels eines nachgeordneten Schwellwertscheiders (ZS) die Abbildung des Vektors (**e**) auf einen binären Vektor ($\mathbf{c}^d$) erfolgt und dass in einem mit dem Schwellwertscheider (ZS) verbundenen Decoder (ZD) durch Decodierung des binären Vektors ($\mathbf{c}^d$) Schätzwerte $\hat{u} = [\hat{u}^{(1)}, \hat{u}^{(2)}, \ldots, \hat{u}^{(k)}]^T$ gebildet werden.

6. Vorrichtung zur Durchführung eines Vielfachzugriffs in einem Kommunikationssystem

   - mit einer einzigen Zentrale (Z) und einer Vielzahl von Teilnehmereinrichtungen (T) im Kommunikationsnetzwerk und
   - mit einer Datenübertragung unter Verwendung eines gemischten Frequenz- und Zeitmultiplexverfahrens, derart, dass der von der Teilnehmereinrichtung (T) gesendete Zeitrahmen einen Zeitschlitz enthält, in welchem die Teilnehmer (T) der Zentrale (Z) einen Sendewunsch mittels teilnehmerspezifische Muster signalisieren können,

**dadurch gekennzeichnet, dass** zur Erzeugung des teilnehmerspezifischen Musters ($v^{(k)}$) in der Teilnehmereinrichtung (T) ein Encoder (TE) und ein mit diesem verbundener Mapper (TM) angeordnet sind, wobei der Encoder (TE) derart ausgestaltet ist, dass dem Teilnehmer ein binäres Codewort ($c^{(k)}$) fest zugewiesen wird und die binären Codewörter ($c^{(k)}$) einen Superimposed Code bilden und wobei der Mapper (TM) derart ausgestaltet ist, dass aus insgesamt n Spreizsequenzen $\xi^i$ der Länge D diejenigen ausgewählt werden, für die im binären Codewort $c_i^{(k)}$ = 1 gilt, dass empfangsseitig eine Einrichtung (ZM) zur Maskierung des überlagerten Empfangssignals (r) vorgesehen ist, welche mit einem Filter (ZF) verbunden ist, dass mittels einer dem Filter (ZF) nachgeordneten Einrichtung (ZE) Entscheidungsvariable $e_i$ gebildet werden, welche in einem Schwellwertentscheider (ZS) mindestens einmal mit einem gleitendem Schwellwert $f_1$, $f_2$, $f_3$, ... basierend auf Entscheidungswerten (e) und/oder auf Verhältnissen von Entscheidungswerten $e_i$ / $e_j$ und auf einem verwendeten Superimposed Code verglichen werden, bis entweder die Anzahl von einem Sendewunsch signalisierenden Teilnehmern oder eine nicht auflösbare Kollision detektiert wird, derart, dass bis zu m gleichzeitig übertragende Teilnehmer aufgelöst werden oder die gleichzeitige Anmeldung, nicht auflösbare Kollision von mehr als m Teilnehmern detektiert wird, und dass die nach Maßgabe der detektierten Anzahl gebildeten Schätzwerte (û) einem Decoder (ZD) zugeführt werden.

7. Vorrichtung nach Anspruch 6, **dadurch gekennzeichnet, dass** dem Mapper (TM) eine Einrichtung (TZE) zur Erzeugung des Sendesignals ($s^{(k)}$) aus dem teilnehmerspezifischen Muster ($v^{(k)}$) nachgeordnet ist.

8. Vorrichtung nach Anspruch 6 und 7, **dadurch gekennzeichnet, dass** in der Einrichtung (ZM) zur Maskierung des überlagerten Empfangssignals (**r**) aus den D+2(L-1) Empfangswerten die mittleren (D) Werte entnommen und diese im Vektor **y** - $[y_1,y_2,...,y_D]^T$ zusammengefasst werden, wodurch die ersten sowie die letzten L-1 Empfangswerte nicht weiter betrachtet werden.

9. Vorrichtung nach Anspruch 6, **gekennzeichnet durch** die Verwendung von Superimposed Codes und somit weißem Spektrum.

## Claims

1. A method for multiple access in a communication system having:

   - a single central station (Z) and a plurality of subscriber equipment (T) in the communication network and
   - a data transmission using a mixed frequency and time division multiplexing method, in which the time frame transmitted by the subscriber device (T) includes a time slot in which the subscriber (T) of the center (Z) can signal a request to send,

   **characterized in that** the subscriber device (T) generates respectively subscriber-specific patterns ($v^{(k)}$) whereas binary code word ($c^{(k)}$) are used for the subscriber-specific patterns ($v^{(k)}$) which forms a superimposed code, whereas a binary code word ($c^{(k)}$) of the binary code words ($c^{(k)}$) is permanently assigned to each subscriber (T) and whereas in the center (Z) for the superimposed subscriber-specific patterns successively threshold test with sliding threshold values $f_1$, $f_2$, $f_3$, ... based on decision values (e) and / or on conditions of decision values $e_i$ / $e_j$ and on a used superimposed code be carried out, until either the number of participants signaling a request to send or a not solvable collision is detected, such that up to m simultaneously transmitted participants can be dissolved or the simultaneously registration of not solvable collision of more than m participants is detected and whereas according to the number of detections the decoding is done.

2. A method according to claim 1, **characterized in that** an encoder (TE) arranged in the subscriber device (T) is signaling a request to send $u^{(k)}$ = 1 by a binary code word (**c**$^{(k)}$) which is permanently assigned to the participants (T) and that a mapper (TM) connected to the encoder (TE) and a device (TZE) down streamed to the mapper (TM) - corresponding to the position of a particular binary state in the code word (**c**$^{(k)}$) - are generating as the transmission signal (**s**$^{(k)}$) that subscriber-specific patterns ($v^{(k)}$) of cyclically continued spread sequences $\xi^i$.

3. A method according to claim 1, **characterized in that** in the control center (Z) the detection of a transmission desire $u^{(k)}$ = 1 is carried out by:

• detection of the transmitted user-specific pattern, which consists of the superposition according to a logical OR-combination of individual binary code words, can be made based on certain received values of the superimposed receiving signal (**r**) after a matched filtering for the signature sequences is formed by the energy of sub-vectors in the vector (*e*) of the decision variable ($e_i$) and the resulting decision variables ($e_i$) as energy values with sliding threshold values $f_1, f_2, f_3$ are compared,
• determining the code words contained in the received samples or determining a unresolvable conflict and
• determining the detected code words belonging to the participant.

4. A method according to claim **2, characterized in that** the encoder (TE) at a send request $u^{(k)} = 1$ provides a binary code word

$$\mathbf{c}^{(k)} = [c^{(k)}_1, c^{(k)}_2, \ldots, c^{(k)}_n]^T$$

of length n, which is permanently assigned to the subscriber ($T^k$), and if there is no request to send $u^{(k)} = 0$ the zero word is provided, whereby the mapper (TM) according to a request to send $(u^{(k)} = 1)$ selects those of total n spreading sequences

$$\boldsymbol{\xi^i} = [\xi^i_1, \xi^i_2, \ldots, \xi^i_D]^T, \ 1 \leq i \leq n,$$

of the length D, for which in the binary code word $c_i^{(k)} = 1$ is valid and generates as output signal the D-dimensional vector

$$\mathbf{v}^{(k)} = \sum_{i=1}^{n} c_i^{(k)} \boldsymbol{\xi^i},$$

whereby the spreading sequences $\xi_i^i$ comes from the field of complex numbers, whereby in the absence of request to send $u^{(k)} = 0$ the mapper (TM) generates the zero vector, and whereby in the device (TZE) to form the time- and discrete-value transmission signal (**s**$^{(k)}$) the vector (**v**$^{(k)}$) is supplemented cyclically by a prefix of length L-1.

5. A method according to claim 3, **characterized in that** in the control center (Z) as the first in a device (ZM), a masking of the superimposed received signal (**r**) in accordance with extracted mean (D) received values is done and a vector **y** = [$y_1, y_2, ..., y_D$]$^T$ is formed, whereby the vector (**y**) is combined with a matrix $\Xi^H$ in a downstream filter (ZF) wherein from the filtering a nL-dimensional vector **d** = [$\mathbf{d}_1^T, \mathbf{d}^T_2, ... , \mathbf{d}^T_n$]$^T$ results, whereby in a filter (ZF) downstream device (ZE) according to the energies of the partial vectors $\mathbf{d}_i$, $1 \leq i \leq n$ an n-dimensional vector **e** = [$e_1, e_2, ... , e_n$] with decision variables ($e_i$) as coefficients is formed, whereby by means of a downstream threshold-value (ZS) the mapping of the vector (**e**) to a binary vector (**c**$^d$) is done and whereby in the threshold value (ZS) associated to a decoder (ZD) by decoding the binary vector (**c**$^d$) estimated values û = [$\hat{u}^{(1)}, \hat{u}^{(2)}, ... , \hat{u}^{(K)}$]$^T$ are formed.

6. Apparatus for carrying out a multiple access in a communication system having:

   - a single central station (Z) and a plurality of subscriber equipment (T) in the communication network and
   - a data transmission using a mixed frequency and time division multiplexing method, in which the time frame transmitted by the subscriber device (T) includes a time slot and in which the subscriber (T) can signal a request to send to the center (Z) by subscriber-specific patterns,

   **characterized in that** for generating the subscriber-specific pattern ($v^{(k)}$) in the subscriber equipment (T), an encoder (TE) and a mapper (TM) connected thereto are arranged, whereby the encoder (TE) is such that a binary code word ($c^{(k)}$) is firmly assigned to the participant and the binary code word ($c^{(k)}$) forms a superimposed code and whereby the mapper (TM) is such that the mapper (TM) selects those of total n spreading sequences $\xi^i$ of the length D for which in the binary code word $c_i^{(k)} = 1$ is valid, whereby on the receiving side a device (ZM) is arranged for masking the superimposed received signal (**r**) which is connected to a filter (ZF), whereby by means of a downstream device (ZE) decision variables ($e_i$) are formed, which in a threshold value (ZS) at least once are compared with a sliding threshold value $f_1, f_2, f_3, ...$ based on decision values (e) and / or on conditions of decision values $e_i / e_j$ and on a used superimposed code until either the number of participants signaling a request to send or a not solvable collision is detected, such that up to m simultaneously transmitted participants can be dissolved or the simultaneously registration of not solvable collision of more than m participants is detected and whereby in accordance with the detected number formed values (û) are fed to a decoder (ZD).

**7.** Apparatus according to claim 6, **characterized in that** a means (TZE) for generating a transmission signal (s$^{(k)}$) from that subscriber-specific pattern (v$^{(k)}$) is arranged downstream the Mapper (TM).

**8.** Apparatus according to claim 6 and 7, **characterized in that** in the device (ZM) for masking the superimposed received signal (**r**) from the D + 2 (L-1) received values the average (D) values are taken out and these are combined in the vector **y** = [y$_1$,y$_2$,...,y$_D$]$^T$, whereby the first and the last L-1 received values are not considered further.

**9.** Apparatus according to claim 6, **characterized by** the use of superimposed code and thus a white spectrum.

**Revendications**

**1.** Procédé d'accès multiple dans un système de communication:

- avec une station centrale unique (Z) et une pluralité d'équipements d'abonné (T) dans le réseau de communication et
- une transmission de données en utilisant une fréquence mélangée et répartition dans le temps procédé multiplex, de sorte que l'envoyé de la base de temps de l'appareil d'abonné (T) comprend un intervalle de temps dans lequel les participants (T) peuvent signaler une demande de transmission pour le centre (Z) par motif spécifique à l'abonné,

**dans lequel** dans l'appareil d'abonné (T) des motifs spécifique à l'abonné **v**$^{(k)}$ sont générés, à condition que des mots de code binaire (**c**$^{(k)}$) pour les motifs spécifique à l'abonné **v**$^{(k)}$ peut être utilisé, qui forment une code superposé, à condition que chaque l'appareil d'abonné (T) un mot de code binaire (**c**$^{(k)}$) des mots de code binaire (**c**$^{(k)}$) est attribuée fixe et que dans le centre de contrôle (Z) pour les motifs spécifique à l'abonné superposé **v**$^{(k)}$ tests de seuil successivement avec des valeurs de seuil de glissement f$_1$, f$_2$, f$_3$, ... sur la base de valeurs de décision (e) et / ou rapports de valeurs de *décision e$_i$ / e$_j$* et une code superposé utilisant est réalisée, pour détecter une signalisation abonné demande de transmission ou d'une collision non-solubles, de sorte que de jusqu'à m abonnés simultanée transmises peut résoudre ou l'inscription simultanée d'une collision non-solubles de plus de m abonnés est détecté et conformément au nombre détecter le décodage être effectuées.

**2.** Procédé selon la revendication 1, **caractérisé en ce qu'**un codeur (TE) disposé dans l'appareil d'abonné (T) signalé la demande de transmission u$^{(k)}$ = 1 par un mot de code binaire (**c**$^{(k)}$), qui est affecté en permanence d'un participant (T) et **en ce que** le codeur (TE) connecté mapper (TM) et ce dispositif en aval (TZE)

- correspondant à la position d'un état binaire particulier dans le mot de code (**c**$^{(k)}$) - générer comme un signal d'émission (**s**$^{(k)}$) ledit motif spécifique à l'abonné (**v**$^{(k)}$) de séquences d'étalement $\xi^i$ de manière en continuant cyclique.

**3.** Procédé selon la revendication 1, **caractérisé en ce que** dans le centre de contrôle (Z) d'une demande de transmission u$^{(k)}$ = 1 est détecté par:

• la détection du motif spécifique à l'abonné **v**$^{(k)}$ transmis, qui peut consister de la superposition d'un opération logique ODER de certains mots de code binaire, sur la base de certaines valeurs reçues du signal reçu superposé (r) après filtrage adapté pour les séquences de signature, par l'énergie de vecteurs divisés dans le vecteur (e) de la variable de décision (e$_i$) est formée et les variables de décision résultant (e$_i$) comme valeurs de puissance sont comparés avec des valeurs de seuil de glissement f$_1$, f$_2$, f$_3$,
• déterminer les mots de code contenus dans le motif reçu ou déterminer d'une collision non-solubles et
• déterminer des mots de code détectés appartenant aux participants.

**4.** Procédé selon la revendication 2, **caractérisé en ce que** le codeur (TE) pour une demande d'envoi u$^{(k)}$ = 1 fournit un mot de code binaire

$$\mathbf{c}^{(k)} = [\mathrm{c}^{(k)}{}_1, \mathrm{c}^{(k)}{}_2, \dots, \mathrm{c}^{(k)}{}_n]^T$$

de longueur n, qui est assigné le participant ($T^k$) de façon permanente, et s'il n'y a aucune demande d'envoi $u^{(k)} = 0$ fournit le mot nul, **en ce que** le mappeur (TM) à une demande d'envoi $u^{(k)} = 1$ d'un total de n séquences d'étalement

$$\boldsymbol{\xi}^{\mathbf{i}} = [\xi_1^i, \xi_2^i, \dots, \xi_D^i]^T, \ 1 \le i \le n,$$

du longueur D sélectionne celles, pour qui dans le mot de code binaire $c_i^{(k)} = 1$ est applicable, et généré comme le signal de sortie le vecteur D-dimensionnelle

$$\mathbf{v}^{(k)} = \sum_{i=1}^{n} c_i^{(k)} \boldsymbol{\xi}^{\mathbf{i}},$$

dans lequel les séquences d'étalement $\xi_l^i$ dérivée du champ de nombres complexes, **en ce que** lorsqu'il n'y a aucune demande d'envoi $u^{(k)} = 0$ le mappeur (TM) produit le vecteur nul, et **en ce que** dans le dispositif (TZE) pour former le temps et la valeur de signal de transmission discret ($\mathbf{s}^{(k)}$), le vecteur ($\mathbf{v}^{(k)}$) est cycliquement complétant par un préfixe de longueur L-1.

5.  Procédé selon la revendication 3, **caractérisé en ce que** dans le centre de commande (Z) est réalisée d'abord dans un dispositif (ZM) un masquage du signal reçu superposé ($\mathbf{r}$) est formée conformément au moyen retirée (D) reçu de valeurs et un vecteur $\mathbf{y} = [y_1, y_2, \dots, y_D]^T$, **en ce que** le vecteur (y) avant d'un filtre (ZF) est liée avec une matrice $\Xi^H$, dans lequel à partir de la filtration un vecteur de dimension nL $d = [\mathbf{d}_1^T, \mathbf{d}^T{}_2, \dots, \mathbf{d}^T{}_n]^T$ résulte, **en ce que** dans un dispositif (ZE) d'aval le filtre (ZF) conformément à l'énergie des vecteurs partiels $\mathbf{d}_i$, $1 \le i \le n$ un n-dimensionnelle vecteur $\mathbf{e} = [e_1, e_2, \dots, e_n]$ est formée avec des variables de décision($e_i$) comme coefficients, **en ce que** au moyen d'une valeur de seuil (ZS) en aval, représentant du vecteur ($\mathbf{e}$) d'un vecteur binaire est exécutée ($\mathbf{c}^d$), et **en ce que** dans un dispositif de décision à valeur de seuil (ZS) avant le filtre (ZF) par décodage du vecteur binaire ($\mathbf{c}^d$) estimation les valeurs $\hat{u} = [\hat{u}^{(1)}, \hat{u}^{(2)}, \dots, \hat{u}^{(K)}]^T$ sont formées.

6.  Dispositif pour la mise d'accès multiple dans un système de communication:

    - avec une station centrale unique (Z) et une pluralité d'équipements d'abonné (T) dans le réseau de communication et
    - une transmission de données en utilisant une fréquence mélangée et répartition dans le temps procédé multiplex, de sorte que l'envoyé de la base de temps de l'appareil d'abonné (T) comprend un intervalle de temps dans lequel les participants (T) peuvent signaler une demande de transmission pour le centre (Z) par motif spécifique à l'abonné,

    **caractérisé en ce que** pour générer le motif spécifique à l'abonné $\mathbf{v}^{(k)}$, dans l'équipement d'abonné (T) sont disposés un codeur (TE) et relié à celui-ci un mapper (TM), à condition que le codeur (TE) est forme comme un mot de code binaire ($\mathbf{c}^{(k)}$) est assigné le participant ($T^k$) de façon permanente et les mots de code binaire ($\mathbf{c}^{(k)}$) former un code superposé, et à condition que le mapper (TM) est forme comme d'un total de n séquences d'étalement $\xi^{\mathbf{i}}$ du longueur D celui sont sélectionné, pour qui dans le mot de code binaire $c_i^{(k)} = 1$ est applicable, **en ce que** à l'extrémité de réception est prévu un dispositif (ZM) pour masquer le signal reçu superposé (r), qui est relié avec un filtre (ZF), **en ce que** au moins un dispositif (ZE) en aval le filtre (ZF) des variables de décision $e_i$ sont formés, qui, dans une valeur de seuil (ZS) au moins une fois sont comparés avec une valeur de seuil de glissement $f_1, f_2, f_3$, sur la base de valeurs de décision ($e$) et / ou rapports de valeurs de décision $e_i / e_j$ et une code superposé utilisant, pour détecter le nombre d'une signalisation abonné demande de transmission ou d'une collision non-solubles, de sorte que de jusqu'à m abonnés simultanée transmises peut résoudre ou l'inscription simultanée d'une collision non-solubles de plus de m abonnés est détecté et **en ce que** les valeurs estimées ($\hat{u}$) ainsi formé du nombre détecté sont amenée à un décodeur (ZD).

7.  Dispositif selon la revendication 6, **caractérisé en ce que** un moyen (TZE) pour générer le signal d'émission ($\mathbf{s}^{(k)}$) sur la base du motif spécifique à l'abonné ($v^{(k)}$) est disposé en aval le mapper (TM).

8. Dispositif selon la revendication 6 et 7, **caractérisé en ce que** dans le dispositif (ZM) pour masquer le signal reçu superposé (**r**) à partir du D + 2 (L-1) valeurs reçues, les valeurs moyennes (D) et celles sont combinés du vecteur $y = [y_1,y_2,...,y_D]^T$, dans lequel le premier et le dernier L-1 valeurs reçues ne sont pas considérées plus loin.

9. Dispositif selon la revendication 6, **caractérisé par** l'utilisation du code superposé et donc spectre blanc.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19643970 A1
- DE 19726009 A1
- DE 19511403 A1
- DE 4391438 C2
- DE 4432928 C2
- DE 19738365 C2
- DE 19742347 A1
- DE 9214885 U1
- DE 19641084 A1
- DE 19704018 A1
- DE 4423978 A1
- US 5917813 A
- EP 0936832 A1
- US 5544155 A

**In der Beschreibung aufgeführte Nicht-Patentliteratur**

- **A.S. TANENBAUM.** Computer Networks. Prentice Hall, 1996
- **G. ANASTASI ; L. LENZINI ; E. MINGOZZI ; A. HETTICH ; A. KRÄMLING.** MAC Protocols for Wideband Wireless Local Access: Evolution Toward Wirelss ATM. *IEEE Personal Communications,* Oktober 1998, 53-64
- **D. PETRAS ; U. VORNEFELD.** Joint Performance of DSA++ MAC Protocol and SR/D-ARQ Protocol for Wireless ATM under Realistic Traffic and Channel Models. *Computer Networks,* 1999, 903-918
- **R. CHANDRAN ; M.J. PATTON ; P.J.W. MELSA ; D.J. MARCHOK.** *Asynchronous Communication and Symbol Synchronisation in Multipoint-to-point Multicarrier Systems, Global Telecommunications Conference - Globecom,* 1999, vol. 99, 2285-2289
- Nachrichtenübertragung. B.G. Teubner, 1996
- **H.D. LÜKE.** Korrelationssignale. Springer-Verlag, 1992
- **W.H. KAUTZ ; R.C. SINGLETON.** Nonrandom Binary Superimposed Codes. *Fachzeitschrift IEEE Transactions on Information Theory,* Oktober 1964, 363-377
- **A.E. BROUWER ; J.B. SHEARER ; N.J.A. SLOANE ; W.D. SMITH.** A New Table of Constant Weight Codes. *IEEE Transactions on Information Theory,* November 1990, 1334-1380